# EUROPEAN PATENT SPECIFICATION

(11) **EP 4 274 198 B1**
(45) Date of publication and mention of the grant of the patent: **03.09.2025**
(21) Application number: 21927560.9
(22) Date of filing: 20.10.2021
(51) Int. Cl.: H04L 67/06, H04L 67/12, G07C 5/00

(54) **FILE TRANSMISSION METHOD, DEVICE AND SYSTEM**
DATEIÜBERTRAGUNGSVERFAHREN, -VORRICHTUNG UND -SYSTEM
PROCÉDÉ, DISPOSITIF ET SYSTÈME DE TRANSMISSION DE FICHIERS

(30) Priority: 23.02.2021 CN 202110203568
(43) Date of publication of application: 08.11.2023
(73) Proprietor: Shenzhen Yinwang Intelligent Technologies Co., Ltd., Shenzhen, Guangdong 518129 (CN)
(72) Inventor: WANG, Xiaohua, Shenzhen, Guangdong 518129 (CN); XU, Taiping, Shenzhen, Guangdong 518129 (CN)
(74) Representative: Pfenning, Meinig & Partner mbB
(86) International application number: PCT/CN2021/124883
(87) International publication number: WO 2022/179136

(56) References cited:
- CN-A- 101 958 919
- CN-A- 101 958 919
- CN-A- 105 871 706
- CN-A- 108 833 530
- CN-A- 108 833 530
- US-A1- 2015 127 941
- ANONYMOUS: "ISO 14229-1 Road vehicles - Unified diagnostic services (UDS) Part 1: Application layer", 1 February 2020 (2020-02-01), XP009541010, Retrieved from the Internet <URL:https://www.iso.org/obp/ui/#iso:std:iso:14229:-1:en>

## Description

### TECHNICAL FIELD

This application relates to the field of automobile technologies, and specifically, to a file transfer method, apparatus, and system.

### BACKGROUND

A vehicle diagnostic instrument, also known as a vehicle fault diagnostic instrument, is a professional device for diagnosing a vehicle, and is mainly used to detect performance of a vehicle, monitor occurrence of a vehicle fault, and find out a location and a cause of the fault.

In an application process, the vehicle diagnostic instrument is generally connected to a vehicle-mounted terminal installed in the vehicle, and may exchange information with the vehicle-mounted terminal, to implement file transfer between the vehicle diagnostic instrument and the vehicle-mounted terminal. For example, the vehicle diagnostic instrument may download a file in the vehicle-mounted terminal, or the vehicle diagnostic instrument may upload a file stored in the vehicle diagnostic instrument to the vehicle-mounted terminal.

However, currently, efficiency of transferring a file between a vehicle diagnostic instrument and a vehicle-mounted terminal is relatively low.
ANONYMOUS: "ISO 14229-1 Road vehicles - Unified diagnostic services (UDS) Part 1: Application layer",ISO NORM, ISO, CH, PAGE(S) 1 - 466, 1 February 2020 (2020-02-01), XP009541010 discloses discloses a file transfer method within the UDS protocol, including services such as RequestFileTransfer, TransferData, and RequestTransferExit. Specifically, D1 describes the RequestFileTransfer service used for initiating data transfers between a client and a server, the composition and flow of request and response messages, and the handling of data blocks. The transfer process involves sending a request with a service identifier, receiving responses with data blocks, and storing these blocks into files using identifiers that correspond to file byte positions.

### SUMMARY

To resolve a problem in the current technology that efficiency of file transfer between a vehicle diagnostic instrument and a vehicle-mounted terminal is relatively low, embodiments of this application provide a file transfer method, apparatus, and system.

The invention is defined in the appended set of claims.

According to the solution provided in the embodiments of this application, the first terminal apparatus may simultaneously obtain one or more data blocks by using the first response, and may determine, based on the identifiers of the first files respectively corresponding to the one or more data blocks that are included in the first response, the files to which the obtained data blocks belong. In other words, the first terminal apparatus may obtain a plurality of data blocks at the same time, that is, the first terminal apparatus may obtain files in a parallel transfer manner.

Therefore, compared with the current technology, the solution improves efficiency of obtaining files by the first terminal apparatus. In addition, because the first terminal apparatus may obtain a plurality of data blocks at the same time, this solution may further improve utilization of network bandwidth.

Further, the first terminal apparatus may be a vehicle diagnostic instrument, and the vehicle diagnostic instrument needs to implement vehicle diagnosis by using an obtained file. The solution in this application can improve efficiency of obtaining files by the first terminal apparatus. Therefore, a speed of obtaining files by the vehicle diagnostic instrument can be increased, diagnosis efficiency of the vehicle diagnostic instrument can be correspondingly improved, and a waiting time of a user who needs to obtain a vehicle diagnosis result is reduced.

In addition, because the diagnosis efficiency of the vehicle diagnostic instrument is improved, diagnosis efficiency of a diagnosis system including the vehicle diagnostic instrument and a vehicle-mounted terminal is correspondingly improved. Further, in the solution provided in the embodiments of this application, the diagnosis efficiency of the vehicle diagnostic instrument is improved, and a fault cause of a vehicle can be quickly determined, so as to complete vehicle fault rectification as soon as possible. Therefore, a fault time of the vehicle is reduced, and user experience of using the vehicle can be improved.

### BRIEF DESCRIPTION OF DRAWINGS

FIG. 1 is a schematic diagram of a scenario in which a vehicle diagnostic instrument exchanges information with a vehicle-mounted terminal;
FIG. 2(a) is a schematic diagram of a request in the UDS protocol;
FIG. 2(b) is a schematic diagram of another request in the UDS protocol;
FIG. 2(c) is a schematic diagram of a response in the UDS protocol;
FIG. 2(d) is a schematic diagram of another response in the UDS protocol;
FIG. 3(a) is a schematic diagram of file transfer between a first terminal apparatus and a second terminal apparatus;
FIG. 3(b) is another schematic diagram of file transfer between a first terminal apparatus and a second terminal apparatus;
FIG. 4 is a schematic diagram of interaction between a first terminal apparatus and a second terminal apparatus;
FIG. 5 is a schematic diagram of a working procedure of a file transfer method according to an embodiment of this application;
FIG. 6 is a schematic diagram of a working procedure of another file transfer method according to an embodiment of this application;
FIG. 7 is a schematic diagram of a working procedure of another file transfer method according to an embodiment of this application;
FIG. 8 is a schematic diagram of a working procedure of another file transfer method according to an embodiment of this application;
FIG. 9 is a schematic interaction diagram of a file transfer method according to an embodiment of this application;
FIG. 10 is a schematic diagram of a working procedure of another file transfer method according to an embodiment of this application;
FIG. 11 is a schematic diagram of a structure of a file transfer apparatus according to an embodiment of this application;
FIG. 12 is a schematic diagram of a structure of a terminal apparatus according to an embodiment of this application, and
FIG. 13 is a schematic diagram of a structure of a file transfer system according to an embodiment of this application.

### DESCRIPTION OF EMBODIMENTS

The following describes the technical solutions in embodiments of this application with reference to the accompanying drawings in embodiments of this application.

Terms used in the following embodiments are merely intended to describe specific embodiments, but are not intended to limit this application. As used in the specification and appended claims of this application, singular expressions "one", "a", "the", "the foregoing", "this", and "the one" are also intended to include expressions such as "one or more", unless the contrary is clearly indicated in its context. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

To resolve a problem in a current technology that efficiency of file transfer between a vehicle diagnostic instrument and a vehicle-mounted terminal is relatively low, embodiments of this application provide a file transfer method and apparatus.

The vehicle diagnostic instrument may be in a plurality of forms, for example, may be a computer, a tablet computer, a mobile phone, or another dedicated device. In addition, software for performing vehicle diagnosis is installed in the vehicle diagnostic instrument. The vehicle diagnostic instrument may detect performance of a vehicle, monitor occurrence of a vehicle fault, and find out a location and a cause of the fault by using the software.

The vehicle-mounted terminal may also be referred to as an onboard computer, an in-vehicle computer, or a vehicle controller, is a control unit in a vehicle, is also a data center, may be a controller of a component in a vehicle, or may be an integrated vehicle controller, for example, may be an electronic control unit (electronic control unit, ECU), a domain controller unit (domain control unit, DCU), or a mobile data center (mobile data center, MDC). The vehicle-mounted terminal is usually installed in a vehicle, and may generate information such as a corresponding diagnostic trouble code (diagnostic trouble code, DTC) based on a fault of the vehicle. In addition, by exchanging information with the vehicle diagnostic instrument, the vehicle-mounted terminal may transfer the DTC to the vehicle diagnostic instrument, so that the vehicle diagnostic instrument obtains the DTC.

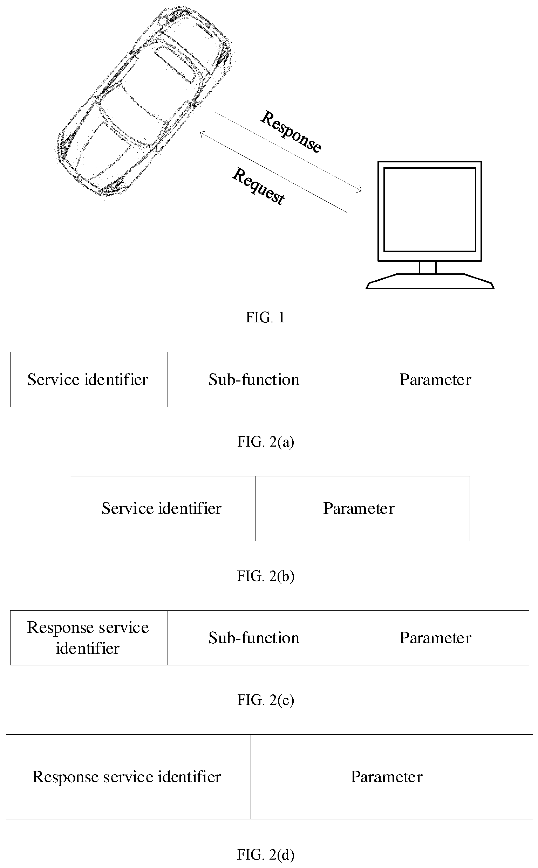

As shown in a schematic diagram of a scenario shown in FIG. 1, in a process in which a vehicle diagnostic instrument obtains a DTC, a vehicle-mounted terminal may be generally considered as a lower computer, and the vehicle diagnostic instrument is generally considered as a host computer. In this case, the vehicle diagnostic instrument may send a request to the vehicle-mounted terminal, and after receiving the request, the vehicle-mounted terminal transfers a corresponding response to the vehicle diagnostic instrument. If the request sent by the vehicle diagnostic instrument is used to request the DTC, the vehicle-mounted terminal may transfer a response including the DTC to the vehicle diagnostic instrument.

In addition, communication between the vehicle diagnostic instrument and the vehicle-mounted terminal complies with the unified diagnostic services (unified diagnostic services, UDS) protocol. The UDS protocol is defined by the ISO-14229 series standards. As a diagnosis communication protocol in a vehicle electronic environment, the UDS protocol defines a format of information communicated between the vehicle diagnostic instrument and the vehicle-mounted terminal.

According to the definition in the UDS protocol, there are usually two types of requests sent by the vehicle diagnostic instrument or the vehicle-mounted terminal. One type of request includes a sub-function (that is, Sub-function), and the other type of request does not include a sub-function.

The request including a sub-function may be shown in FIG. 2(a). As shown in FIG. 2(a), the request includes three parts: a service identifier (that is, service identity document, SID), a sub-function (that is, Sub-function), and a parameter (that is, Parameter). In addition, the request that does not include a sub-function may be shown in FIG. 2(b). As shown in FIG. 2(b), the request includes two parts: a service identifier SID and a parameter (that is, Parameter).

In the UDS protocol, the service identifier is used to indicate a service that the request is used to request. For example, if the request is used to request to obtain a DTC in the vehicle-mounted terminal, the service identifier in the request is 0x19. Whether the request needs to include a sub-function part may be determined based on the requested service. The parameter part in the request may generally load a parameter of the requested service. For example, if the request is used to request to obtain a file, the parameter part may load a name of the file.

Corresponding to the requests, responses sent by the vehicle diagnostic instrument or the vehicle-mounted terminal generally also include two types. One type of response includes a sub-function (that is, Sub-function), and the other type of response does not include a sub-function.

The response including a sub-function may be shown in FIG. 2(c). As shown in FIG. 2(c), the response includes three parts: a response service identifier (response service identity document, Response SID), a sub-function (that is, Sub-function), and a parameter (that is, Parameter). In addition, the request that does not include a sub-function may be shown in FIG. 2(d). As shown in FIG. 2(d), the request includes two parts: a response service identifier (that is, Response SID) and a parameter (that is, Parameter).

In the UDS protocol, the response service identifier is used to indicate a service corresponding to the response. For example, if the response is used to provide a DTC for the vehicle diagnostic instrument, the response service identifier in the response is 0x59. Based on the service corresponding to the response, it may be determined whether the response needs to include a sub-function part. The parameter part in the response may generally load a parameter of the service corresponding to the response. For example, if the response is used to transfer a file, the parameter part may load a data block of the file.

According to the definition in the UDS protocol, if a request sent by the vehicle diagnostic instrument is used to request a DTC, a service identifier in the request is 0x19. After receiving the request sent by the vehicle diagnostic instrument, if it is determined that the service identifier in the request is 0x19, the vehicle-mounted terminal feeds back a response including the DTC to the vehicle diagnostic instrument, where a response service identifier in the response is 0x59, and the DTC is located in a parameter (that is, Parameter) part of the response. In this case, the vehicle diagnostic instrument may obtain the DTC based on the response transferred by the vehicle-mounted terminal.

Through the foregoing data information exchange process, the vehicle diagnostic instrument may obtain the DTC. In addition, the vehicle-mounted terminal usually includes a plurality of files, for example, a log file. In some cases, the vehicle diagnostic instrument further needs to obtain a file in the vehicle-mounted terminal. For example, after the DTC is obtained, the vehicle diagnostic instrument determines, based on the DTC, that a fault exists in the vehicle, and the vehicle diagnostic instrument needs to obtain the log file in the vehicle-mounted terminal, to further determine information such as a time when the fault occurs. In this case, the vehicle diagnostic instrument further needs to obtain the log file in the vehicle-mounted terminal.

In addition, in some cases, the vehicle diagnostic instrument further needs to upload a file to the vehicle-mounted terminal. For example, sometimes the vehicle diagnostic instrument needs to upload a configuration file to the vehicle-mounted apparatus.

In other words, the vehicle diagnostic instrument not only needs to obtain the DTC of the vehicle-mounted terminal, but in some cases, file transfer also needs to be performed between the vehicle diagnostic instrument and the vehicle-mounted terminal.

For ease of description, in embodiments of this application, it is set that a terminal apparatus that needs to obtain a file is a first terminal apparatus, and a terminal apparatus that stores the file is a second terminal apparatus. For example, if the vehicle diagnostic instrument needs to download a file in the vehicle-mounted terminal, the vehicle diagnostic instrument is the first terminal apparatus, and the vehicle-mounted terminal is the second terminal apparatus.

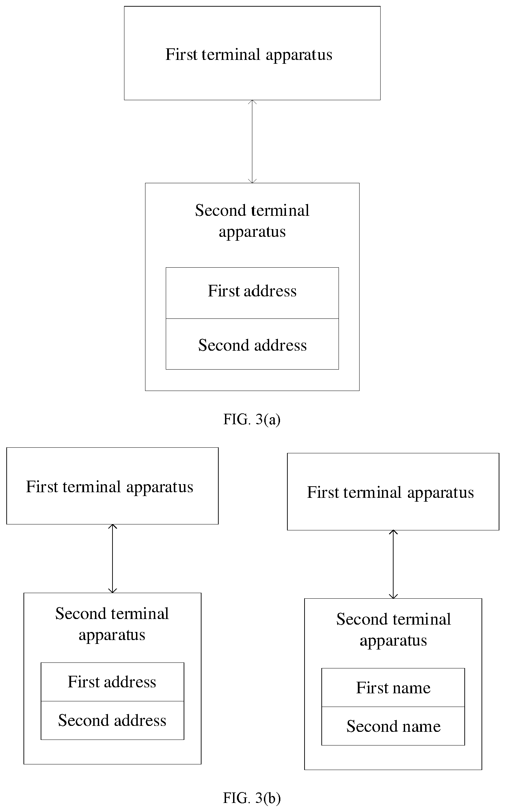

As shown in FIG. 3(a), currently, the first terminal apparatus may obtain a file in the second terminal apparatus in the following manner: The first terminal apparatus transfers a request for obtaining file information to the second terminal apparatus, where a service identifier of the request is 0x38, and the file information generally includes a size of the file; after receiving the request, the second terminal apparatus feeds back a response to the first terminal apparatus, where a response service identifier of the response is 0x78; then, after receiving the response, the first terminal apparatus transfers a request for obtaining a file to the second terminal apparatus, where a service identifier of the request is 0x34, and a parameter part of the request includes address information of the required file; and after receiving the request, the second terminal apparatus determines, based on the address information included in the request, the file required by the first terminal apparatus, and transfers the file to the first terminal apparatus.

In the example corresponding to FIG. 3(a), files in the second terminal apparatus include a file corresponding to a first address and a file corresponding to a second address. If the request that is transferred by the first terminal apparatus and used for obtaining a file includes the first address, the second terminal apparatus transfers the file corresponding to the first address to the first terminal apparatus after receiving the request.

However, in this solution, the first terminal apparatus needs to determine an address of each file, so as to generate, based on the address of each file, the request for obtaining a file and transfer the request, which is relatively complex. Therefore, currently, the second manner is commonly used for file transfer.

In the second manner, as shown in FIG. 3(b), the first terminal apparatus may obtain a file in the second terminal apparatus through the following steps: The first terminal apparatus transfers a request for obtaining file information to the second terminal apparatus, where a service identifier of the request is 0x38, and the file information generally includes a file size; after receiving the request, the second terminal apparatus feeds back a response including the file information to the first terminal apparatus, where a response service identifier of the response is 0x78; then, the first terminal apparatus transfers a request for obtaining a file to the second terminal apparatus, where a service identifier of the request is 0x36, and a parameter part of the request includes a name of the required file; and after receiving the request, the second terminal apparatus determines, based on the name of the file included in the request, the file required by the first terminal apparatus, and transfers the file to the first terminal apparatus.

In an example corresponding to FIG. 3(b), file names in the second terminal apparatus are different. If a request transferred by the first terminal apparatus includes a file name, after receiving the request, the second terminal apparatus transfers a file corresponding to the file name to the first terminal apparatus.

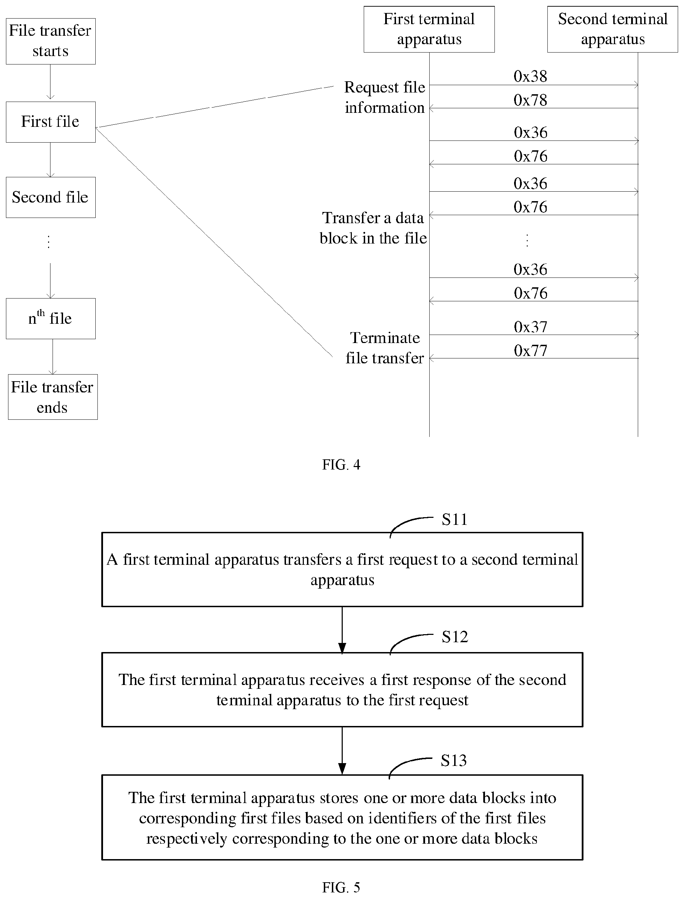

In a current solution, when transferring a file to the first terminal apparatus, the second terminal apparatus usually splits the file into a plurality of data blocks, and sequentially transfers the plurality of data blocks to the first terminal apparatus. The following describes the current file transfer process by using FIG. 4. In addition, in an example corresponding to FIG. 4, a service identifier of a request that is used to obtain a file and that is transferred by the first terminal apparatus is 0x36.

As shown in the schematic interaction diagram shown in FIG. 4, in the current solution, in an information interaction process between the first terminal apparatus and the second terminal apparatus, the first terminal apparatus first transfers a request for obtaining file information to the second terminal apparatus, where a service identifier of the request is 0x38, and the file information generally includes a file size; after receiving the request, the second terminal apparatus feeds back a response including the file information to the first terminal apparatus, where a response service identifier of the response is 0x78; and then, the first terminal apparatus transfers a request for obtaining a file to the second terminal apparatus, where a service identifier of the request is 0x36. In this example, the second terminal apparatus includes a plurality of files such as a file 1, a file 2, ..., and a file n, and the first terminal apparatus needs to obtain the file 1. In this case, the request for obtaining a file that is transferred by the first terminal apparatus includes a name of the file 1. After receiving the request for obtaining a file that is sent by the first terminal apparatus, the second terminal apparatus splits the file 1 into a plurality of data blocks, and transfers a response including the first data block of the file 1 to the first terminal apparatus, where a response service identifier of the response is 0x76. After the first terminal apparatus receives the response, if it is determined that the complete file 1 is not received, the first terminal apparatus continues to transfer a request for obtaining a file to the second terminal apparatus, where a service identifier of the request is 0x36, and the request includes the name of the file 1; and after receiving the request, the second terminal apparatus transfers a response including the second data block in the file 1 to the first terminal apparatus, where a response service identifier of the response is 0x76. If the first terminal apparatus determines that the complete file 1 is not received after receiving the second data block, the process is repeated. If the first terminal apparatus determines, after receiving a data block, that the complete file 1 is received, the first terminal apparatus transfers a request for requesting to terminate the transfer to the second terminal apparatus, where a service identifier of the request is 0x37. After receiving the request, the second terminal apparatus transfers a response corresponding to the request, where a response service identifier of the response is 0x77, indicating that transfer of the file 1 is ended.

It can be known from the description of the foregoing information exchange process that, when sending a file to the first terminal apparatus, the second terminal apparatus splits the file into one or more data blocks before sending the file, and transfers the file in a serial transfer manner. In the serial transfer manner, only one file is transferred between two terminal apparatuses at a time, and message interaction and processing are simple.

When the first terminal apparatus needs to obtain a plurality of files, a next file can be transferred only after one of the files has been transferred. For example, in the example shown in FIG. 4, the first terminal apparatus can obtain another file such as the file 2 only after obtaining the file 1.

Therefore, in the current technology, efficiency of obtaining, by the first terminal apparatus, a file in the second terminal apparatus is relatively low, and efficiency of transferring a file between the first terminal apparatus and the second terminal apparatus is relatively low.

Further, if the first terminal apparatus is a vehicle diagnostic instrument, and the vehicle diagnostic instrument usually needs to use an obtained file to diagnose a vehicle, efficiency of obtaining the file by the vehicle diagnostic instrument is relatively low, which leads to relatively low diagnosis efficiency of the vehicle diagnostic instrument.

In addition, with the development of vehicle digitalization, especially self-driving, functions of vehicle-mounted terminals in vehicles are increasingly diversified. In particular, a current ECU is gradually becoming more complex and has a tendency to develop into a super ECU. In this case, a system of the vehicle-mounted terminal is increasingly complex and has a powerful computing capability. As a result, the vehicle-mounted terminal usually includes a complex file system, and files included in the vehicle-mounted terminal may reach dozens of gigabytes (gigabyte, G) or even hundreds of gigabytes. Correspondingly, a quantity of files that the vehicle diagnostic instrument need to obtain from the vehicle terminal is increasing. In this case, if the vehicle diagnostic instrument obtains files in the vehicle terminal by using the current technology, it is usually difficult to meet a vehicle diagnosis requirement of a user due to relatively low diagnosis efficiency.

To resolve the problem in the current technology that efficiency of file transfer between a vehicle diagnostic instrument and a vehicle-mounted terminal is relatively low, embodiments of this application provide a file transfer method, apparatus, and system.

To clarify the solution provided in this application, the following describes the solution provided in this application by using embodiments with reference to the accompanying drawings.

An embodiment of this application provides a file transfer method. The file transfer method is applied to a first terminal apparatus, and the first terminal apparatus is a terminal apparatus, in a vehicle diagnostic instrument and a vehicle-mounted terminal, that needs to obtain a first file.

For example, if the vehicle-mounted terminal stores the first file, and the vehicle diagnostic instrument needs to obtain the first file, the vehicle diagnostic instrument is the first terminal apparatus, and correspondingly, the vehicle-mounted terminal is a second terminal apparatus. In addition, if a first file is stored in the vehicle diagnostic instrument, and the vehicle-mounted terminal needs to obtain the first file, the vehicle-mounted terminal is the first terminal apparatus, and correspondingly, the vehicle diagnostic instrument is the second terminal apparatus.

Refer to a schematic diagram of a working procedure shown in FIG. 5. The file transfer method provided in an embodiment of this application includes the following steps.

Step S11: A first terminal apparatus transfers a first request to a second terminal apparatus, where the first request is used to request one or more first files.

The one or more first files are generally files stored in the second terminal apparatus. In this case, the first terminal apparatus requests, by using the first request, to obtain the one or more first files from the second terminal apparatus.

In this embodiment of this application, the first request generally includes related information of the first file, so that after receiving the first request, a receiver of the first request determines, based on the related information of the first file, the first file that the first terminal apparatus needs to obtain.

The related information of the first file included in the first request may include a storage path of the first file in the second terminal apparatus and a name of the first file, or include an identifier of the first file; or when names of files in storage paths of the second terminal apparatus are different, the related information of the first file may include a name of the first file.

In the UDS protocol, the first request may be information whose service identifier is 0x36, and the related information of the first file is located in a parameter part of the first request.

In the solution provided in embodiments of this application, if the first files include a plurality of files, the first terminal apparatus may obtain the plurality of first files by sending a plurality of first requests, where each first request includes related information of at least one first file; or the first terminal apparatus may send one first request, where the first request includes related information of the plurality of first files.

If one first request includes the related information of the plurality of first files, the parameter part of the first request may include a plurality of parameter segments, and each parameter segment includes related information of one of the first files.

Step S12: The first terminal apparatus receives a first response of the second terminal apparatus to the first request, where the first response includes one or more data blocks and identifiers of first files respectively corresponding to the one or more data blocks.

The one or more data blocks included in the first response are data blocks in the one or more first files. After receiving the first request, the second terminal apparatus may determine, based on the first request, the one or more first files that the first terminal apparatus expects to obtain, and split each first file into one or more data blocks, and then the second terminal apparatus transfers the first response to the first terminal apparatus, so that the first terminal apparatus obtains the data blocks in the one or more first files.

In addition, the first response not only includes the one or more data blocks, but also includes the identifiers of the first files respectively corresponding to the one or more data blocks. A file corresponding to a data block refers to a file to which the data block belongs. That is, if a data block is a data block in a file A, a file corresponding to the data block is the file A.

In the solution of embodiments of this application, if the first request is used to request to obtain a plurality of first files, the second terminal apparatus may transfer a plurality of first responses to the first terminal apparatus, where each first response includes a data block of one of the first files and an identifier of the first file. Alternatively, the second terminal apparatus may transfer data blocks of the plurality of first files by using one first response, where the first response includes the data blocks of the plurality of first files, and includes identifiers of first files respectively corresponding to the data blocks.

In the UDS protocol, the first response may be information whose response service identifier is 0x76, and the data blocks and the identifiers of the first files corresponding to the data blocks are located in a parameter part of the first response. If one first response includes the plurality of data blocks and the identifiers of the first files respectively corresponding to the plurality of data blocks, the parameter part of the first response may include a plurality of parameter segments, and each parameter segment includes one of the data blocks and an identifier of a first file corresponding to the data block.

In this case, after receiving the first response, the first terminal apparatus may determine, based on the identifiers of the first files corresponding to the data blocks, the first files to which the data blocks belong.

Further, if a first file is split into at least two data blocks, the first response generally further includes a sequence count corresponding to a data block. For example, if the second terminal apparatus splits the first file into three data blocks, and one first response includes the first data block, the first response further includes a sequence count indicating that the data block is the first data block.

Based on the sequence count, the first terminal apparatus may determine a position of the received data block in the first file, so as to determine the first file based on the at least two received data blocks.

In the UDS protocol, the sequence count of the data block is located in the parameter part of the first response. If one first response includes a plurality of data blocks and identifiers of first files respectively corresponding to the plurality of data blocks, a parameter part of the first response includes a plurality of parameter segments, and each parameter segment includes one of the data blocks and an identifier of a first file corresponding to the data block, a sequence count of the data block may be located in the parameter segment including the data block.

By performing step S12, the first terminal apparatus may obtain the data blocks in the one or more first files. If there are a plurality of first files, the first terminal apparatus may obtain the data blocks in the plurality of first files at the same time. That is, the first terminal apparatus may obtain the plurality of data blocks in the plurality of first files in a parallel transfer manner.

Step S13: The first terminal apparatus stores the one or more data blocks into the corresponding first files based on the identifiers of the first files respectively corresponding to the one or more data blocks.

In the solution provided in embodiments of this application, the first terminal apparatus determines, based on the identifiers of the first files respectively corresponding to the data blocks, the first files to which the data blocks belong, and stores the data blocks into the corresponding first files.

If a first file includes only one data block, the first terminal apparatus obtains the complete first file after obtaining the first response.

If a first file is split into a plurality of data blocks, the first terminal apparatus and the second terminal apparatus may perform a plurality of times of information exchange, so that the first terminal apparatus obtains a plurality of first responses, where the plurality of first responses respectively include the plurality of data blocks of the first file, so that the first terminal apparatus obtains the complete first file.

If a first file includes a plurality of data blocks, after obtaining the plurality of data blocks, the first terminal apparatus may obtain a complete first file in a manner of splicing the plurality of data blocks.

When splicing the plurality of data blocks, if the first responses include sequence counts of the data blocks, the first terminal apparatus may splice the plurality of data blocks based on the sequence counts, so as to obtain the complete first file. For example, if the first terminal apparatus receives three data blocks belonging to a same first file, and sequence counts of the data blocks are respectively "1", "2", and "3", when splicing the data blocks, the first terminal apparatus determines that the data block whose sequence count is "1" is the first data block during splicing, the data block whose sequence count is "2" is the second data block during splicing, and the data block whose sequence count is "3" is the third data block during splicing.

Alternatively, if the first response does not include the sequence count of the data block, the first terminal apparatus may determine a splicing order of the data blocks based on receiving time points of the first responses including the data blocks. In this case, an earlier receiving time point of a first response indicates an earlier position, in the splicing order, of a data block included in the first response.

According to the solution provided in embodiments of this application, the first terminal apparatus can simultaneously obtain, by using the first response, the data blocks included in the one or more first files, and can determine, based on the identifiers included in the first response, the files to which the obtained data blocks belong. If the first terminal apparatus requests a plurality of first files from the second terminal apparatus by using the first request, the first terminal apparatus may obtain a plurality of data blocks by using a first response, that is, the first terminal apparatus may obtain the first files in a parallel transfer manner.

Therefore, compared with the current technology, the solution provided in embodiments of this application improves efficiency of obtaining a file by the first terminal apparatus. In addition, in this embodiment of this application, the first terminal apparatus may obtain at least two files at the same time. Therefore, network bandwidth utilization can be further improved.

Further, the first terminal apparatus may be a vehicle diagnostic instrument, and the vehicle diagnostic instrument needs to implement vehicle diagnosis by using an obtained file. The solution in this application can improve efficiency of obtaining files by the first terminal apparatus. Therefore, a speed of obtaining files by the vehicle diagnostic instrument can be increased, diagnosis efficiency of the vehicle diagnostic instrument can be correspondingly improved, and a waiting time of a user who needs to obtain a vehicle diagnosis result is reduced.

In addition, because the diagnosis efficiency of the vehicle diagnostic instrument is improved, diagnosis efficiency of a diagnosis system including the vehicle diagnostic instrument and a vehicle-mounted terminal is correspondingly improved. In addition, in the solution provided in embodiments of this application, the diagnosis efficiency of the vehicle diagnostic instrument is improved, and a fault cause of a vehicle can be quickly determined, so as to complete vehicle fault rectification as soon as possible. Therefore, a fault time of the vehicle is reduced, and user experience of using the vehicle can be further improved.

In the solution provided in embodiments of this application, the first terminal apparatus determines, based on an identifier of a first file corresponding to a data block, the first file to which the data block belongs. The first terminal apparatus may determine the identifier of the first file in a plurality of manners.

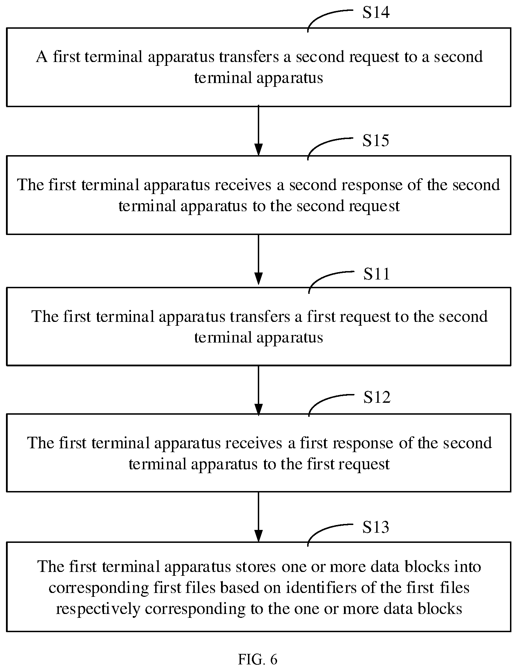

In a feasible implementation, the second terminal apparatus allocates an identifier to the first file. In this case, refer to a schematic diagram of a working procedure shown in FIG. 6. In this embodiment of this application, the following steps are included:
Step S14: The first terminal apparatus transfers a second request to the second terminal apparatus.

The second request includes parallel transfer indication information of the one or more first files.

The parallel transfer indication information is used to indicate that the first terminal apparatus supports obtaining the one or more first files in a parallel transfer manner, and is used to request to obtain the identifiers of the first files.

To improve efficiency of obtaining the files by the first terminal apparatus, in this embodiment of this application, the first terminal apparatus may obtain the files in a parallel transfer manner. If the first files need to be obtained in a parallel transfer manner, the first terminal apparatus may generate a second request corresponding to the first files, where the second request usually further includes related information of the one or more first files. The related information of the first files usually includes storage paths of the first files in the second terminal apparatus and names of the first files. In addition, if names of files in storage paths of the second terminal apparatus are different, the related information of the first files may include the names of the first files.

The second request may be information whose service identifier is 0x38 in the UDS protocol, and the related information of the first files may be loaded in a parameter part of the second request.

If the first terminal apparatus needs to obtain a plurality of first files, the first terminal apparatus may transfer a plurality of second requests to the second terminal apparatus, where each second request includes parallel transfer indication information of one of the first files. Alternatively, the first terminal apparatus may transfer one second request to the second terminal apparatus, where the second request includes parallel transfer indication information of the plurality of first files. In this case, the parameter part of the second request may include a plurality of parameter segments, and each parameter segment includes related information of one of the first files.

Step S15: The first terminal apparatus receives a second response of the second terminal apparatus to the second request, where the second response includes the identifiers of the one or more first files.

After obtaining the second request, the second terminal apparatus may determine that the first terminal apparatus supports file transfer in the parallel transfer manner. In this case, the second terminal apparatus allocates the corresponding identifiers to the one or more first files, generates the second response corresponding to the second request, and transfers the second response to the first terminal apparatus. The second response includes the identifiers of the one or more first files, so that the first terminal apparatus determines the identifiers of the one or more first files based on the second response.

The second terminal apparatus may allocate the identifiers to the first files in a plurality of manners. In a feasible implementation, if names of files in different storage paths of the second terminal apparatus are different, the second terminal apparatus may determine that the names of the first files are the identifiers of the first files.

Alternatively, in another feasible implementation, the second terminal apparatus may prepare a coding table, where the coding table includes a plurality of different codes, and may sequentially allocate codes in the coding table to the first files as the identifiers of the first files. For example, when the second terminal apparatus determines, based on the received second request, that three first files need to be transferred to the first terminal apparatus, the second terminal apparatus may randomly select three different codes from the coding table as codes of the three first files respectively.

Certainly, the second terminal apparatus may alternatively allocate the identifiers to the first files in another manner. This is not limited in this embodiment of this application.

In addition, if a plurality of first files need to be transferred, the second terminal apparatus allocates different identifiers to the plurality of first files, so as to distinguish the first files.

According to the foregoing embodiment, the second terminal apparatus may allocate corresponding identifiers to the first files, and the first terminal apparatus may determine the identifiers of the first files based on the second response transferred by the second terminal apparatus.

Alternatively, in another feasible implementation solution, the first terminal apparatus may alternatively determine the identifiers of the first files by using a protocol between the first terminal apparatus and the second terminal apparatus.

For example, if names of files in different storage paths in the second terminal apparatus are different, the protocol may specify that the identifiers of the first files are the names of the first files. In this case, the first terminal apparatus determines that the names of the first files that need to be obtained by the first terminal apparatus are the identifiers of the first files.

Certainly, another protocol may alternatively be set between the first terminal apparatus and the second terminal apparatus, and the first terminal apparatus determines the identifiers of the first files according to the another protocol. This is not limited in this embodiment of this application.

Further, in the solution provided in embodiments of this application, the second response may further include sizes of the one or more first files. That is, after obtaining the second request, the second terminal apparatus generates and transfers the second response, where the second response not only includes the identifiers of the one or more first files, but also includes the sizes of the one or more first files.

Based on the second response, the first terminal apparatus may determine the sizes of the first files that need to be obtained by the first terminal apparatus, and further determine, based on sizes of the data blocks that are received by the first terminal apparatus and that belong to the first files, whether the first terminal apparatus has received a complete first file. Correspondingly, this embodiment of this application further includes the following step:
after the first terminal apparatus determines, based on sizes of the received one or more data blocks and the sizes that are of the first files corresponding to the one or more data blocks and that are included in the second response, that at least one first file has been completely transferred, the first terminal apparatus transfers first termination information corresponding to a first target file, where the first target file is the at least one first file that has been completely transferred, and the first termination information is used to indicate to terminate transfer of the first target file.

The first termination information generally includes related information of the first target file, so that the second terminal apparatus determines, based on the related information of the first target file, the first target file that has been transferred.

The related information of the first target file may include an identifier of the first target file; or the related information of the first target file may include a name of the first target file and a storage path of the first target file in the second terminal apparatus; or if names of files in storage paths of the second terminal apparatus are different, the related information of the first target file may include a name of the first target file.

In the solution provided in embodiments of this application, the first terminal apparatus may simultaneously obtain the one or more first files. If the first terminal apparatus needs to obtain one first file, after determining that a complete first file is received, the first terminal apparatus may determine that the first file is the first target file.

In addition, if the first terminal apparatus needs to obtain a plurality of first files, after determining that transfer of any first file is completed, the first terminal apparatus may determine that the first file is the first target file, and transfer first termination information corresponding to the first target file. Alternatively, the first terminal apparatus may transfer first termination information after completely receiving all the first files. In this case, the first target file includes all the first files.

After receiving the first termination information, the second terminal apparatus may transfer a termination response corresponding to the first termination information, and release the identifier corresponding to the first target file. In this case, the first terminal apparatus may further receive the termination response transferred by the second terminal apparatus, and terminate transfer of the first target file.

According to a definition of the UDS protocol, a service identifier of the first termination information may be "0x37", and the related information of the first target file is located in a parameter part of the first termination information. If the first target file includes a plurality of first files, the first termination information may include a plurality of parameter segments, and each parameter segment includes related information of one of the first target files.

Further, in a process of obtaining the first file, the first terminal apparatus may further obtain a second file, that is, obtain the first file and the second file in a parallel transfer manner.

Correspondingly, the solution provided in embodiments of this application further includes the following steps.

Step 1: The first terminal apparatus transfers a third request to the second terminal apparatus, where the third request is used to request one or more second files.

In the current technology, file transfer can be performed between the first terminal apparatus and the second terminal apparatus only in a serial transfer manner. Therefore, the first terminal apparatus can transfer the third request only after transfer of the first files is completed.

However, in this embodiment of this application, file transfer may be performed between the first terminal apparatus and the second terminal apparatus in a parallel transfer manner. In this case, a time at which the first terminal apparatus transfers the third request is not strictly limited. For example, the first terminal apparatus may transfer the third request in a process of transferring the first file, so that the first terminal apparatus obtains the second file in a process of obtaining the first file, to implement parallel transfer of the first file and the second file; or the first terminal apparatus may transfer the third request before or after transferring the first file. This is not limited in this embodiment of this application.

Step 2: The first terminal apparatus receives a third response of the second terminal apparatus to the third request, where the third response includes one or more data blocks and identifiers of second files respectively corresponding to the one or more data blocks.

The one or more data blocks included in the third response are data blocks in the one or more second files.

Before obtaining the third response, the first terminal apparatus has determined an identifier of each second file. In this embodiment of this application, the first terminal apparatus may determine the identifiers of the one or more second files by using a protocol with the second terminal apparatus.

Alternatively, in another feasible implementation, the second terminal apparatus allocates the corresponding identifiers to the one or more second files. In this solution, the first terminal apparatus may transfer a parallel transfer indication of the one or more second files to the second terminal apparatus. After receiving the parallel transfer indication, the second terminal determines the identifiers of the one or more second files, and feeds back a corresponding response to the first terminal apparatus, where the response includes the identifiers of the one or more second files. In this case, the first terminal apparatus may determine the identifier of each second file based on the response transferred by the second terminal apparatus.

Because the first terminal apparatus has determined the identifier of each second file, in this step, the first terminal apparatus may determine, based on the identifier that is of the second file corresponding to each data block and that is in the third response, the second file to which each data block included in the third response belongs.

Step 3: The first terminal apparatus stores the one or more data blocks into the corresponding second files based on the identifiers of the second files respectively corresponding to the one or more data blocks.

The first terminal apparatus may determine, based on the identifiers of the second files respectively corresponding to the one or more data blocks in the third response, the second files to which the data blocks belong, and store the data blocks into the second files to which the data blocks belong.

In the current technology, the first terminal apparatus can obtain files only in a serial transfer manner. Therefore, in a file transfer process, the first terminal apparatus can receive only one file each time, and can receive another file only after receiving a complete file, thereby resulting in low efficiency of obtaining the files.

However, in the solution provided in embodiments of this application, the first terminal apparatus may request to obtain the one or more second files by using the third request. If there are a plurality of second files, the first terminal apparatus may obtain the plurality of second files at the same time, that is, obtain the plurality of second files in a parallel transfer manner, thereby improving efficiency of file transfer between the first terminal apparatus and the second terminal apparatus.

Further, in the solution provided in embodiments of this application, the first terminal apparatus may further obtain the second file in a process of obtaining the first file. In addition, in this solution, even if the first terminal apparatus obtains data blocks of one or more first files and data blocks of one or more second files at the same time, the first terminal apparatus may determine, by using identifiers corresponding to the data blocks, a file to which each data block belongs. This does not cause confusion of the data blocks, implements parallel transfer of the first files and the second files, and further improves efficiency of obtaining files by the first terminal apparatus.

In addition, in some cases, although the first terminal apparatus supports obtaining a third file in a third terminal apparatus in a parallel transfer manner, the third terminal apparatus storing the third file cannot support transferring a file to the first terminal apparatus in a parallel transfer manner. For this scenario, this embodiment of this application further includes the following steps.

Step 1: The first terminal apparatus transfers a fourth request to the third terminal apparatus, where the fourth request includes parallel transfer indication information of one or more third files.

The parallel transfer indication information of the one or more third files is used to indicate that the first terminal apparatus supports obtaining the third files in a parallel transfer manner.

The fourth request usually includes related information of the one or more third files. The related information of the third files generally includes storage paths and names of the third files. Alternatively, if names of files in storage paths in the third terminal apparatus are different, the related information of the third files may include the names of the third files.

In a feasible implementation, the fourth request is UDS information whose service identifier is 0x38 that is applied in conventional information exchange between a vehicle diagnostic instrument and a vehicle-mounted terminal. The related information of the one or more third files is located in a parameter part of the information. If the first terminal apparatus obtains a plurality of third files by using one fourth request, the parameter part of the fourth request may include a plurality of parameter segments, and each parameter segment includes related information of one of the third files.

Step 2: The first terminal apparatus receives an error response of the third terminal apparatus to the fourth request, where the error response is used to indicate that the third terminal apparatus does not support parallel transfer.

In this embodiment of this application, because the third terminal apparatus does not support parallel transfer, after receiving the fourth request, the third terminal apparatus sends the error response to the first terminal apparatus, to indicate that the third terminal apparatus cannot transfer the one or more third files to the first terminal apparatus in the parallel transfer manner.

Step 3: The first terminal apparatus transfers a fifth request, where the fifth request is used to indicate that the first terminal apparatus obtains the one or more third files in a serial transfer manner.

After receiving the error response, the first terminal apparatus may determine that the third terminal apparatus does not support parallel transfer. In this case, the first terminal apparatus may obtain the third files in the third terminal apparatus in a serial transfer manner. Therefore, the first terminal apparatus may transfer the fifth request to the third terminal apparatus, so that the third terminal apparatus transfers the third files to the first terminal apparatus in a serial transfer manner.

The fifth request generally includes related information of one third file. In this case, in a serial transfer process, after receiving the fifth request, the third terminal apparatus may transfer a response corresponding to the fifth request to the first terminal apparatus, where the response may include information such as a size of the third file. Then, the first terminal apparatus may transfer a request for obtaining the third file to the third terminal apparatus, and after receiving the request for obtaining the third file, the third terminal apparatus transfers a corresponding response to the first terminal apparatus, where the response includes a data block of the third file.

In addition, in the serial transfer process, the first terminal apparatus obtains another file after obtaining the complete third file. In other words, in the serial transfer process, the first terminal apparatus can obtain a data block of only one file at a time, and obtain another file after obtaining a complete file, that is, the first terminal apparatus does not obtain two or more files at the same time.

For example, serial transfer may be performed between the first terminal apparatus and the third terminal apparatus by using the file transfer manner shown in FIG. 4, so that the first terminal apparatus obtains the third files.

In addition, after receiving the error response, the first terminal apparatus may further transfer response information corresponding to the error response, and the third terminal apparatus may further receive the response information corresponding to the error response, and determine, based on the response information, that the first terminal apparatus already knows that the third terminal apparatus does not support transferring the third files in the parallel transfer manner.

In a feasible implementation, the fourth request is UDS information whose service identifier is 0x38 that is applied in conventional information exchange between a vehicle diagnostic instrument and a vehicle-mounted terminal.

By performing the foregoing steps, in a case in which the third terminal apparatus does not support parallel transfer, the first terminal apparatus can still obtain the files in the third terminal apparatus, so that a file transfer manner of the first terminal apparatus is compatible with the serial transfer manner and the parallel transfer manner, and the first terminal apparatus can be applied to relatively diversified scenarios.

Correspondingly, in the solution provided in embodiments of this application, a file transfer method is provided. The method is applied to a second terminal apparatus, and the second terminal apparatus is a terminal apparatus, in a vehicle diagnostic instrument and a vehicle-mounted terminal, that stores a first file. In addition, a first terminal apparatus is a terminal apparatus, in the vehicle diagnostic instrument and the vehicle-mounted terminal, that needs to obtain the first file.

For example, if the vehicle-mounted terminal stores the first file, and the vehicle diagnostic instrument needs to obtain the first file, the vehicle diagnostic instrument is the first terminal apparatus, and correspondingly, the vehicle-mounted terminal is a second terminal apparatus. In addition, if the first file is stored in the vehicle diagnostic instrument, and the vehicle-mounted terminal needs to obtain the first file, the vehicle-mounted terminal is the first terminal apparatus, and correspondingly, the vehicle diagnostic instrument is the second terminal apparatus.

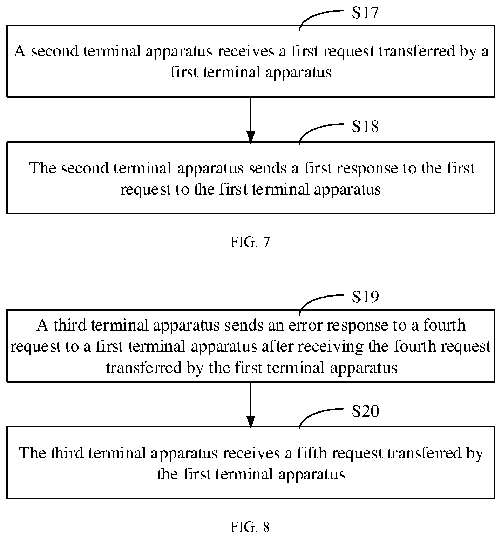

Refer to a schematic diagram of a working procedure shown in FIG. 7. The file transfer method provided in an embodiment of this application includes the following steps.

Step S17: The second terminal apparatus receives a first request transferred by the first terminal apparatus, where the first request is used to request one or more first files.

The first request usually includes related information of the first files. The second terminal apparatus may determine, by using the related information of the first files, the first files that the first terminal apparatus needs to obtain.

Step S18: The second terminal apparatus sends a first response to the first request to the first terminal apparatus, where the first response includes one or more data blocks and identifiers of first files respectively corresponding to the one or more data blocks.

After determining the first files required by the first terminal apparatus, the second terminal apparatus splits the first file into at least one data block, then generates the first response, and transfers the first response to the first terminal apparatus. In this case, the first terminal apparatus may obtain the data blocks in the first file by using the first response, and determine, by using the identifiers, the files to which the data blocks belong.

In the solution provided in embodiments of this application, there are one or more first files. If the first request indicates that the first terminal apparatus needs to obtain a plurality of first files, the second terminal apparatus may generate one first response, where the first response includes data blocks of the plurality of first files, and includes identifiers of first files corresponding to the data blocks. Alternatively, the second terminal apparatus may generate a plurality of first responses, where each first response includes a data block of at least one first file and includes an identifier of a first file to which the data block belongs.

The first request may be information whose service identifier is 0x36 in the UDS protocol. Correspondingly, the first response may be information whose response service identifier is 0x76 in the UDS protocol. In addition, the data blocks and the identifiers of the first files corresponding to the data blocks are located in a parameter part of the first response. If one first response includes the plurality of data blocks and the identifiers of the first files respectively corresponding to the plurality of data blocks, the parameter part of the first response may include a plurality of parameter segments, and each parameter segment includes one of the data blocks and an identifier of a first file corresponding to the data block.

By using the foregoing steps, the second terminal apparatus may transfer the data blocks in the one or more first files to the first terminal apparatus, so that the first terminal apparatus obtains the data blocks.

In addition, according to this embodiment, the first terminal apparatus may not only obtain the data blocks included in the files, but also determine, based on the identifiers included in the response, the files to which the obtained data blocks belong. In this case, even if the first terminal apparatus obtains data blocks in more than two files at the same time, the first terminal apparatus may determine, by using the identifiers, the files to which the data blocks belong, thereby avoiding confusion of the data blocks.

Therefore, according to the solution provided in embodiments of this application, the first terminal apparatus may simultaneously obtain more than two files, that is, file transfer may be performed between the first terminal apparatus and the second terminal apparatus in a parallel transfer manner.

Because the first terminal apparatus may obtain the files in a parallel transfer manner, this solution can improve efficiency of obtaining the files by the first terminal apparatus compared with the current technology. In addition, in this embodiment of this application, the first terminal apparatus may obtain at least two files at the same time. Therefore, network bandwidth utilization can be further improved.

Further, the first terminal apparatus may be a vehicle diagnostic instrument, and the vehicle diagnostic instrument needs to implement vehicle diagnosis by using an obtained file. The solution in this application can improve efficiency of obtaining a file by the first terminal apparatus. Therefore, a speed of obtaining a file by the vehicle diagnostic instrument can be increased, diagnosis efficiency of the vehicle diagnostic instrument can be correspondingly improved, and a waiting time of a user who needs to obtain a vehicle diagnosis result is reduced.

In addition, because the diagnosis efficiency of the vehicle diagnostic instrument is improved, diagnosis efficiency of a diagnosis system including the vehicle diagnostic instrument and a vehicle-mounted terminal is correspondingly improved. In addition, in the solution provided in embodiments of this application, the diagnosis efficiency of the vehicle diagnostic instrument is improved, and a fault cause of a vehicle can be quickly determined, so as to complete vehicle fault rectification as soon as possible. Therefore, a fault time of the vehicle is reduced, and user experience of using the vehicle can be further improved.

In this embodiment of this application, the first terminal apparatus determines, based on the identifiers of the files corresponding to the data blocks, the files to which the data blocks belong. The first terminal apparatus may determine the identifiers of the files according to a protocol between the first terminal apparatus and the second terminal apparatus. Alternatively, the second terminal apparatus may allocate the identifiers to the files.

If the second terminal apparatus allocates the identifiers to the files, this embodiment of this application further includes the following steps.

First, the second terminal apparatus receives a second request transferred by the first terminal apparatus, where the second request includes parallel transfer indication information of the one or more first files.

The second request is used to indicate that the first terminal apparatus supports obtaining the one or more first files in a parallel transfer manner, and is used to request to obtain the identifiers of the one or more first files.

Then, the second terminal apparatus sends a second response to the second request to the first terminal apparatus, where the second response includes the identifiers of the one or more first files.

After receiving the second request, the second terminal apparatus may determine, based on the second request, that the first terminal apparatus expects to obtain the first files in the parallel transfer manner. In this case, the second terminal apparatus may allocate the corresponding identifiers to the one or more first files, and transfer the second response including the identifiers to the first terminal apparatus, so that the first terminal apparatus determines the identifiers of the one or more first files based on the second response.

The second request may be information whose service identifier is 0x38 in the UDS protocol. Correspondingly, the second response may be information whose response service identifier is 0x78 in the UDS protocol.

Further, in the solution provided in embodiments of this application, the second response may further include sizes of the one or more first files.

In this case, the first terminal apparatus may determine, based on the sizes of the first files included in the second response and sizes of the data blocks received by the first terminal apparatus, whether the first terminal apparatus has received a complete first file. In addition, after determining that the first terminal apparatus receives the complete first file, the first terminal apparatus may further transfer first termination information to the second terminal apparatus.

Correspondingly, the solution provided in embodiments of this application further includes the following steps.

First, the second terminal apparatus receives the first termination information transferred by the first terminal apparatus, where the first termination information is used to indicate to terminate transfer of a first target file, and the first target file is a first file that has been completely transferred.

Then, the second terminal apparatus sends, to the first terminal apparatus, a termination response to the first termination information, and releases an identifier of the first target file.

After receiving the first termination information, the second terminal apparatus may determine that the first terminal apparatus has received the complete first target file. In this case, the second terminal apparatus may further transfer the termination response to the first terminal apparatus. In addition, the second terminal apparatus may release the identifier of the first target file, and after the identifier of the first target file is released, the identifier may be further allocated to another file.

In the solution provided in embodiments of this application, the second terminal apparatus allocates identifiers to the first files. In addition, in an allocation process, the second terminal apparatus usually needs to determine that identifiers allocated by the second terminal apparatus to different files are different, so as to distinguish the files by using the identifiers. In this case, after the identifier is released, because the identifier of the first target file is different from an identifier of another file, if an identifier needs to be allocated to another file, the second terminal apparatus may directly use the identifier as the identifier of the another file, and the second terminal apparatus does not need to search for an identifier that is not occupied by current files, thereby further improving file transfer efficiency.

In the solution provided in embodiments of this application, file transfer may be implemented between the first terminal apparatus and the second terminal apparatus in a parallel transfer manner. Therefore, in a process of transferring a data block included in the first file, the second terminal apparatus may further transfer a data block included in a second file to the first terminal apparatus, and before or after transferring the data included in the first file, the second terminal apparatus may also transfer a data block in the second file to the first terminal apparatus.

For this scenario, this embodiment of this application further includes the following steps.

First, the second terminal apparatus receives a third request transferred by the first terminal apparatus, where the third request is used to request one or more second files.

The third request usually includes related information of the second files. After receiving the third request, the second terminal apparatus determines, based on the related information of the second files, the one or more second files that the first terminal apparatus needs to obtain, splits the one or more second files into one or more data blocks, and generates and transfers a third response accordingly.

The third request may be information whose service identifier is 0x36 in the UDS protocol. Correspondingly, the third response may be information whose response service identifier is 0x76 in the UDS protocol.

Then, the second terminal apparatus sends the third response to the third request to the first terminal apparatus, where the third response includes one or more data blocks and identifiers of second files respectively corresponding to the one or more data blocks.

In this solution, the second terminal apparatus may determine the identifiers of the one or more second files by using a protocol between the second terminal apparatus and the first terminal apparatus.

Alternatively, the second terminal apparatus may allocate an identifier to the at least one second file, and correspondingly, the first terminal apparatus may determine the identifiers of the one or more second files based on the allocation by the second terminal apparatus. In this case, the first terminal apparatus may transfer a request to the second terminal apparatus, where the request includes parallel transfer indication information of the one or more second files. After receiving the request, the second terminal apparatus allocates the corresponding identifiers to the one or more second files, and transfers a corresponding response to the first terminal apparatus, where the response includes the identifiers of the one or more second files, so that the first terminal apparatus determines the identifiers of the one or more second files based on the response.

In addition, after receiving the third request, the second terminal apparatus transfers the third response to the first terminal apparatus, so that the first terminal apparatus obtains the data blocks in the second files.

In the solution of this application, there is no strict time limit for the second terminal apparatus to transfer the third response. For example, the second terminal apparatus may transfer the third response before or after the first file is transferred, or the second terminal apparatus may further transfer the third response in a process of transferring the first file to the first terminal apparatus.

That is, even if the second terminal apparatus has not transferred all the data blocks included in the first files to the first terminal apparatus, the second terminal apparatus may transfer the third response to the first terminal apparatus. After receiving the third response, the first terminal apparatus may obtain the data blocks of the one or more second files, and determine, based on the identifiers included in the third response, the files to which the data blocks belong.

In the solution provided in embodiments of this application, the first terminal apparatus may request to obtain the one or more second files by using the third request. If there are a plurality of second files, the first terminal apparatus may obtain the plurality of second files at the same time, that is, obtain the plurality of second files in a parallel transfer manner, thereby improving file obtaining efficiency.

Further, in the solution provided in embodiments of this application, the first terminal apparatus may further obtain the second file in a process of obtaining the first file. In addition, in this solution, even if the first terminal apparatus obtains data blocks of one or more first files and data blocks of one or more second files at the same time, the first terminal apparatus may determine, by using identifiers corresponding to the data blocks, a file to which each data block belongs. This does not cause confusion of the data blocks, implements parallel transfer of the first files and the second files, and further improves efficiency of obtaining files by the first terminal apparatus.

In some application scenarios, the first terminal apparatus expects to obtain a third file in a third terminal apparatus, but the third terminal apparatus may not support parallel transfer. For this scenario, an embodiment of this application provides another file transfer method.

The file transfer method is applied to a third terminal apparatus, where the third terminal apparatus is a terminal apparatus, in a vehicle diagnostic instrument and a vehicle-mounted terminal, that stores a third file, and the third terminal apparatus does not support parallel transfer.

For example, if the vehicle-mounted terminal stores a third file, and the vehicle diagnostic instrument needs to obtain the third file, the vehicle diagnostic instrument is a first terminal apparatus, and correspondingly, the vehicle-mounted terminal is the third terminal apparatus. In addition, if the vehicle diagnostic instrument stores a third file, and the vehicle-mounted terminal needs to obtain the third file, the vehicle-mounted terminal is the first terminal apparatus, and correspondingly, the vehicle diagnostic instrument is the third terminal apparatus.

Refer to a schematic diagram of a working procedure shown in FIG. 8. The file transfer method provided in this embodiment of this application includes the following steps.

Step S19: After receiving a fourth request transferred by the first terminal apparatus, the third terminal apparatus sends an error response to the fourth request to the first terminal apparatus.

The fourth request includes parallel transfer indication information of one or more third files, and the error response is used to indicate that the third terminal apparatus does not support parallel transfer.

The parallel transfer indication information of the one or more third files is used to indicate that the first terminal apparatus supports obtaining the third files in a parallel transfer manner. The fourth request generally includes related information of the one or more third files, and the related information of the third files generally includes storage paths and names of the third files; or if names of files in storage paths in the third terminal apparatus are different, the related information of the third files may include names of the third files.

In this embodiment of this application, because the third terminal apparatus does not support parallel transfer, after receiving the fourth request, the third terminal apparatus sends the error response to the first terminal apparatus.

In a feasible implementation, the fourth request is UDS information whose service identifier is 0x38 that is applied in conventional information exchange between a vehicle diagnostic instrument and a vehicle-mounted terminal. The related information of the one or more third files is located in a parameter part of the information. If the first terminal apparatus obtains a plurality of third files by using one fourth request, the parameter part of the fourth request may include a plurality of parameter segments, and each parameter segment includes related information of one of the third files.

Step S20: The third terminal apparatus receives a fifth request transferred by the first terminal apparatus, where the fifth request is used to indicate that the first terminal apparatus obtains the one or more third files in a serial transfer manner.

After determining, by using the error response, that the third terminal apparatus does not support parallel transfer, the first terminal apparatus may obtain, in the serial transfer manner, the files included in the third terminal apparatus. In this case, the first terminal apparatus transfers the fifth request to the third terminal apparatus.

The fifth request generally includes related information of one third file. In a serial transfer process, after receiving the fifth request, the third terminal apparatus may transfer a response corresponding to the fifth request to the first terminal apparatus, where the response may include information such as a size of the third file. Then, the first terminal apparatus may transfer a request for obtaining the third file to the third terminal apparatus, and after receiving the request for obtaining the third file, the third terminal apparatus transfers a corresponding response to the first terminal apparatus, where the response includes a data block of the third file.

In addition, in the serial transfer process, the first terminal apparatus obtains another file after obtaining the complete third file. In other words, in the serial transfer process, the first terminal apparatus can obtain a data block of only one file at a time, and obtain another file after obtaining a complete file, that is, the first terminal apparatus does not obtain two or more files at the same time.

For example, serial transfer may be performed between the first terminal apparatus and the third terminal apparatus by using the file transfer manner shown in FIG. 4, so that the first terminal apparatus obtains the third files.

In addition, after receiving the error response, the first terminal apparatus may further transfer response information corresponding to the error response, and the third terminal apparatus may further receive the response information corresponding to the error response, and determine, based on the response information, that the first terminal apparatus already knows that the third terminal apparatus does not support transferring the first files in the parallel transfer manner.

According to the foregoing steps, the first terminal apparatus can still obtain the file in the third terminal apparatus in a case in which the third terminal apparatus does not support parallel transfer, so that an information interaction manner of the first terminal apparatus is compatible with two manners: serial transfer and parallel transfer.

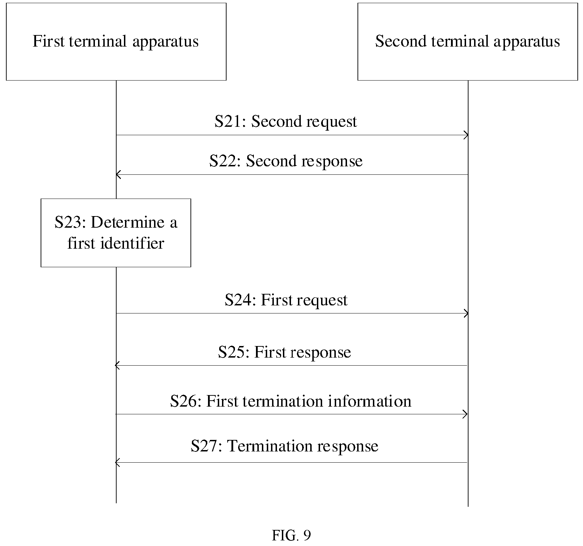

To clarify a file transfer process between the first terminal apparatus and the second terminal apparatus in the solution provided in embodiments of this application, FIG. 9 is disclosed below. Refer to a schematic interaction diagram shown in FIG. 9. In a solution provided in an embodiment of this application, information exchange between a first terminal apparatus and a second terminal apparatus may include the following steps.

Step S21: The first terminal apparatus transfers a second request to the second terminal apparatus.

The second request includes parallel transfer indication information of one or more first files. The second request is used to indicate that the first terminal apparatus supports obtaining the first files in a parallel transfer manner, and is used to request to obtain identifiers of the one or more first files.

According to a definition of the UDS protocol, the second request is usually UDS information whose service identifier is 0x38. The following provides a format of UDS information whose service identifier is 0x38 by using Table 1.

**Table 1**

| Definition of the second request (0x38 information) | | | |
|---|---|---|---|
| Byte | Parameter name | Agreement | Byte value |
| #1 | Service identifier | Necessary | 0x38 |
| #2 | Mode of operation | Necessary | 0x00-0xFF |
| #3 | File path and name length | Necessary | 0x00-0xFF |
| #4 | [Byte#1 (most significant bit) Byte# 1 (least significant bit)] | Necessary | 0x00-0xFF |
| : | : | : | : |

Table 1 indicates that the UDS information whose service identifier is 0x38 may include a plurality of fields, which are respectively the service identifier, the mode of operation (that is, mode of operation), the file path and name length (that is, file path and name length), and the like. The mode of operation field, the file path and name length field are both located in a parameter part of the second request.

In Table 1, the first column indicates a position of a byte occupied by each field in the second request. Specifically, it may be considered that the service identifier field occupies the first byte, the mode of operation field occupies the second byte, and the file path and name length field occupies the third byte and the fourth byte.

If the second request includes parallel transfer indication information of a plurality of first files, the second request may include a plurality of file path and name length fields, where each file path and name length field is used to indicate a path and a name length of one of the first files.

In addition, the second column in Table 1 is various parameters included in the second request, and the third column indicates a type agreed on for each parameter in the UDS protocol. The types include necessary, optional, self-defined, and the like.

Table 1 further indicates that, in the UDS protocol, the service identifier (that is, SID) field is necessary in the second request, and usually occupies one byte. In addition, the service identifier of the second request is 0x38. In this case, the second request may also be referred to as 0x38 information.

The mode of operation field is also necessary in the second request, and usually occupies one byte. A value range of the field is 0x00 to 0xFF. The field is used to indicate a transfer mode corresponding to the first files of the second request. In the solution provided in this embodiment of this application, the transfer mode may be a serial transfer mode or a parallel transfer mode.

The 0x38 information further includes the file path and name length field, where the file path in the field is used to indicate a storage path of the first file requested by the first terminal apparatus in the second terminal apparatus, and the file name length in the field is used to indicate a length of a name of the first file. This field may be represented by using a most significant bit (most significant bit, MSB) and a least significant bit (least significant bit, LSB). In addition, this field occupies two bytes, namely the third byte and the fourth byte, and a value range of each byte is 0x00 to 0xFF.

In addition, the 0x38 information generally further includes a file name field, and the file name field is used to indicate the name of the first file. In this case, with reference to the file path and name length field and the file name field, the second terminal apparatus may determine the first file that the first terminal apparatus needs to obtain.

If the second request includes parallel transfer indication information of a plurality of first files, the parameter part of the second request may include a plurality of parameter segments, and each parameter segment includes related information of one first file. In this case, the 0x38 information may include a plurality of file path and name length fields, and each of the file path and name length fields is used to indicate related information of one of the first files.

It can be learned from Table 1 that in the UDS protocol, the value range of the mode of operation is 0x00 to 0xFF, where different values represent different meanings. For meanings represented by the values, refer to Table 2.

**Table 2**

| Mode of operation | |
|---|---|
| 0x00 | Reserved |
| 0x01 | Add file (download) |
| 0x02 | Delete file |
| 0x03 | Replace file |
| 0x04 | Read file (upload) |
| 0x05 | Read directory |
| 0x06-0xFF | Reserved for future use |
| 0x06 | Add file in parallel |
| 0x07 | Read file in parallel |

As shown in Table 2, it can be learned that the current UDS protocol has defined meanings of "0x00" to "0x05" in the mode of operation. "0x00" represents reserved; "0x01" represents adding a file (that is, downloading a file), and if a byte value loaded in the mode of operation is "0x01", it indicates that the first terminal apparatus needs to obtain a file in a serial transfer manner; "0x02" represents deleting a file; "0x03" represents replacing a file; "0x04" represents reading a file (that is, uploading a file), and if a byte value loaded in the mode of operation is "0x04", it indicates that the first terminal apparatus needs to upload a file stored in the first terminal apparatus in a serial manner; and "0x05" indicates reading a directory. Other remaining byte values, that is, "0x06-0xFF", may be reserved for other functions in the future.

In this case, in this embodiment of this application, another undefined byte value may be applied to the mode of operation field. In an example, a byte value "0x06" may be used to indicate adding a file in parallel, that is, the first terminal apparatus needs to obtain a file in a parallel transfer manner. Correspondingly, the mode of operation field of the second request includes "0x06". In addition, a byte value "0x07" may be used to indicate reading a file in parallel, that is, the first terminal apparatus needs to upload a file stored in the first terminal apparatus in a parallel uploading manner.

Certainly, in another example, another undefined byte value may also be used to indicate that the first terminal apparatus needs to obtain a file in a parallel transfer manner. For example, a byte value "0xFF" may be used to indicate that the first terminal apparatus needs to obtain a file in a parallel transfer manner. In this case, the mode of operation field of the second request includes "0xFF".

Step S22: The second terminal apparatus receives the second request, and sends a second response to the first terminal apparatus. The second response includes the identifiers of the one or more first files.

After receiving the second request, the second terminal apparatus may determine, based on the second request, the file transfer manner supported by the first terminal apparatus. For example, if the first terminal apparatus indicates, by using "0x06" loaded in the mode of operation field, that the first terminal apparatus supports obtaining a file in a parallel transfer manner, and the mode of operation field of the second request includes "0x06", it indicates that the first terminal apparatus supports obtaining the first file in a parallel transfer manner.

After determining that the first terminal apparatus supports obtaining the one or more first files in the parallel transfer manner, the second terminal apparatus allocates the corresponding identifiers to the first files, generates the second response including the identifiers, and transfers the second response to the first terminal apparatus, so that the first terminal apparatus determines the identifiers of the one or more first files based on the second response.

Further, in the solution provided in embodiments of this application, the second response further includes sizes of the one or more first files.

As defined in the UDS protocol, the service identifier of the second request is 0x38, and a response service identifier of the second response corresponding to the second request is usually 0x78. The following provides a format of information whose response service identifier is 0x78 by using Table 3.

**Table 3**

| Definition of the second response (0x78 information) | | | |
|---|---|---|---|
| Byte | Parameter name | Agreement | Byte value |
| #1 | Response service identifier | Necessary | 0x78 |
| #2 | Mode of operation | Necessary | 0x00-0xFF |
| : | : | : | : |
| : | : | : | : |
| : | : | : | : |
| #4+m+3+k | File size compressed | Necessary | 0x00-0xFF |
| : | | : | : |
| #4+m+3+2k-1 | | Necessary | 0x00-0xFF |
| #4+m+3+2k | File identifier | User-defined | 0x00-0xFF |
| : | | | : |
| #4+m+6+2k | | | 0x00-0xFF |
| : | : | : | : |

Table 3 indicates that the second response may include a plurality of fields, which are respectively the response service identifier (that is, response SID), the mode of operation (that is, mode of operation), the file size compressed (that is, file size compressed), the file identifier (that is, file id), and the like. The mode of operation field, the file size compressed field, and the file identifier field are all located in a parameter part of the second response.

In Table 3, the first column indicates a position of a byte occupied by each field in the second response. Specifically, it may be considered that the response service identifier field occupies the first byte, the mode of operation field occupies the second byte, the file size compressed field occupies k bytes, the occupied k bytes are the (4+m+3+k)^{th} to (4+m+3+2k-1)^{th} bytes, and a value range of each byte in the k bytes is 0x00 to 0xFF. In addition, the file identifier field occupies four bytes, which are respectively the (4+m+3+2k)^{th} byte, the (4+m+4+2k)^{th} byte, the (4+m+5+2k)^{th} byte, and the (4+m+6+2k)^{th} byte.

In addition, Table 3 further indicates that, in the UDS protocol, the response service identifier field is necessary in the second response, and usually occupies one byte, and the response service identifier of the second response is 0x78. In this case, the second response may also be referred to as 0x78 information.

The mode of operation field is also necessary in the second response, and usually occupies one byte. A value range of the field is 0x00 to 0xFF. The field is used to indicate a transfer mode of the first file corresponding to the second response. In the solution provided in this embodiment of this application, the transfer mode may be a serial transfer mode or a parallel transfer mode.

The 0x78 information further includes the file size compressed field, which is used to indicate a size of a first file after compression. Based on this field, the first terminal apparatus may determine the size of the first file.

In addition, the 0x78 information generally further includes the file identifier field, and the file identifier field is used to indicate an identifier allocated by the second terminal apparatus to the first file. In this embodiment of this application, the field may be used as an extended field under a definition of the current UDS protocol, and the file identifier is loaded by using the extended field. In this case, after obtaining the second response, the first terminal apparatus may determine the identifier of the first file by identifying the field.

If the second response includes data blocks of a plurality of first files, the second response may include a plurality of file size compressed fields and a plurality of file identifier fields.

In addition, in some cases, the second terminal apparatus cannot support file transfer to the first terminal apparatus in a parallel transfer form. In this case, if the second terminal apparatus receives the second request and determines that the first terminal apparatus requests to obtain the first file in the parallel transfer manner, but the second terminal apparatus does not support transferring the first file to the first terminal apparatus in the parallel transfer manner, the second terminal apparatus may further transfer an error response to the first terminal apparatus.

After receiving the error response, the first terminal apparatus may retransfer a request for obtaining the first file. In this case, the retransferred request is used to indicate that the first terminal apparatus supports obtaining the first file in a serial transfer manner, where a service identifier of the retransferred request is usually 0x38, and "0x01" is loaded in a mode of operation field of the request. In this case, the first terminal apparatus may obtain the first file in the second terminal apparatus in a serial transfer manner.

According to a definition of the UDS protocol, a response service identifier of the error response that is corresponding to the second request and that is transferred by the second terminal apparatus is 0x78, and the error response includes a negative response code.

In the definition of the UDS protocol, the negative response code of the error response may be shown in Table 4.

**Table 4**

| NRC_negative response code | |
|---|---|
| 0x13 | Incorrect message length or invalid format |
| 0x22 | Conditions not correct |
| | |
| 0x31 | Request out of range |
| 0x33 | Security access denied |
| 0x70 | Upload download not accepted |
| 0xF0 | Parallel transfer not supported |

It can be learned from Table 4 that the UDS protocol defines meanings of a plurality of negative response codes. If a length of a request transferred by the first terminal apparatus is incorrect or a format is invalid, an error response fed back by the second terminal apparatus includes a negative response code "0x13". If a condition of a request transferred by the first terminal apparatus is incorrect, an error response fed back by the second terminal apparatus includes a negative response code "0x22". If a request transferred by the first terminal apparatus is out of range, an error response fed back by the second terminal apparatus includes a negative response code "0x31". If a security access of a request transferred by the first terminal apparatus is denied, an error response fed back by the second terminal apparatus includes a negative response code "0x33". If a request transferred by the first terminal apparatus indicates that a file needs to be uploaded or downloaded, but the second terminal apparatus does not accept uploading or downloading by the first terminal apparatus, an error response fed back by the second terminal apparatus includes a negative response code "0x70".

In this embodiment of this application, a byte value that is not defined by the current UDS protocol may be set as a negative response code of an error response. For example, as shown in Table 4, the negative response code of the error response may be set to "0xF0". In this case, if the second terminal apparatus determines that the second terminal apparatus does not support transferring the first file to the first terminal apparatus in the parallel transfer manner, after receiving the second request, the second terminal apparatus transfers an error response to the first terminal apparatus, where the error response includes a negative response code "0xF0". Correspondingly, after receiving the error response, the first terminal apparatus may determine, based on the negative response code in the error response, that the second terminal apparatus does not support transferring the first file in the parallel manner, and the first terminal apparatus may choose to download the first file from the second terminal apparatus in the serial transfer manner.

Certainly, the negative response code of the error response may alternatively be another byte value that is not defined by the UDS protocol. This is not limited in this embodiment of this application.

Step S23: The first terminal apparatus receives the second response sent by the second terminal apparatus, and the first terminal apparatus determines the identifiers of the one or more first files by using the second response.

Step S24: The first terminal apparatus transfers a first request to the second terminal apparatus, where the first request is used to request to obtain the one or more first files.

The first request includes related information of the first files. In this case, after receiving the first request, the second terminal apparatus may determine, based on the related information of the first files, the first files that need to be transferred to the first terminal apparatus.

According to the definition in the UDS protocol, a service identifier of the first request is usually 0x36. The following provides a format of information whose service identifier is 0x36 by using Table 5.

**Table 5**

| Definition of the first request (0x36 information) | | | |
|---|---|---|---|
| Byte | Parameter name | Agreement | Byte value |
| #1 | Service identifier | Necessary | 0x36 |
| #2 | Block sequence counter | Necessary | 0x00-0xFF |
| #3 | File identifier | User-defined | 0x00-0xFF |
| | | | |
| #6 | | | 0x00-0xFF |
| : | : | : | : |

Table 5 indicates that the first request may include a plurality of fields, which are respectively the service identifier, the block sequence counter (that is, block sequence counter), the file identifier (that is, file id), and the like. The block sequence counter field and the file identifier field are both located in a parameter part of the first request.

In Table 5, the first column indicates a position of a byte occupied by each field in the first request. Specifically, it may be considered that the service identifier field occupies the first byte, the block sequence counter field occupies the second byte, the file identifier field occupies four bytes, and the four bytes are respectively the third byte to the sixth byte.

In addition, Table 5 further indicates that in the UDS protocol, the service identifier field is necessary in the first request, and usually occupies one byte. In addition, the service identifier of the first request is 0x36. In this case, the first request may also be referred to as 0x36 information.

The block sequence counter field is also necessary in the first request, and usually occupies one byte. A value of this field ranges from 0x00 to 0xFF. In the first request, a byte value of this field is 0x00.

The first request generally includes the related information of the first file, so that the second terminal apparatus determines, based on the related information of the first file, a file that the first terminal apparatus needs to obtain. In a feasible design, the related information of the first file included in the first request includes an identifier of the first file. Correspondingly, the 0x36 information may further include the identifier of the first file, where the identifier is loaded in the file identifier field in the 0x36 information. In this case, after receiving the first request, the second terminal apparatus may determine, based on the field, the first file that the first terminal apparatus needs to obtain.

The file identifier field is a self-defined field in the UDS protocol, that is, this field is a field obtained after the current UDS protocol is extended. In a feasible design, a value range of a byte value in the file identifier field may be 0x00 to 0xFF.

If the first request is used to request to obtain a plurality of first files, the first request may include a plurality of file identifier fields.

Step S25: The second terminal apparatus transfers a first response to the first request to the first terminal apparatus, where the first response includes one or more data blocks and identifiers of first files respectively corresponding to the one or more data blocks.

After receiving the first request, the second terminal apparatus determines, based on an indication of the first request, one or more first files that the first terminal apparatus needs to obtain. Then, the second terminal apparatus may split the first file, and split the one or more first files into corresponding data blocks. The second terminal apparatus transfers the first response to the first terminal apparatus, where the first response includes the data blocks in the one or more first files and the identifiers.

If the first request indicates that the first terminal apparatus needs to obtain a plurality of first files, the first response generated by the second terminal apparatus may include data blocks of the plurality of first files, and include the identifiers of the first files respectively corresponding to the data blocks. Alternatively, the second terminal apparatus may generate a plurality of first responses, where the first responses respectively include the data blocks of the one or more first files and include the identifiers of the first files to which the data blocks belong.

As defined in the UDS protocol, if the service identifier of the first request is 0x36, the response service identifier of the first response is usually 0x76. The following provides a format of information whose response service identifier is 0x76 by using Table 6.

**Table 6**

| Definition of the first response (0x76 information) | | | |
|---|---|---|---|
| Byte | Parameter name | Agreement | Byte value |
| #1 | Response service identifier | Necessary | 0x76 |
| #2 | Block sequence counter | Necessary | 0x00-0xFF |
| #3 | File identifier | Self-defined | 0x00-0xFF |
| | | | |
| #6 | | | 0x00-0xFF |
| #7 | Data block | Necessary | 0x00-0xFF |
| | | | |
| #n | | Self-defined | 0x00-0xFF |
| : | : | : | : |

Table 6 indicates that the first response may include a plurality of fields, which are respectively the response service identifier, the block sequence counter, the file identifier, a transferred data block (that is, transfer request parameter record), and the like. The block sequence counter field, the file identifier field, and the data block field are all located in a parameter part of the first response.

In Table 6, the first column indicates a position of a byte occupied by each field in the first response. Specifically, it may be considered that the response service identifier field occupies the first byte, the block sequence counter field occupies the second byte, the file identifier field occupies four bytes, the four bytes are the third byte to the sixth byte, and the data block field occupies "n-6" fields, which are respectively the seventh byte to the n^{th} byte.

In addition, Table 6 further indicates that in the UDS protocol, the response service identifier field is necessary in the first response, and usually occupies one byte. In addition, the response service identifier of the first response is 0x76. In this case, the first response may also be referred to as 0x76 information.

The block sequence counter field is also necessary in the first response, usually occupies one byte, and a value range of the field is 0x00 to 0xFF. When transferring the first file to the first terminal apparatus, the second terminal apparatus splits the first file into one or more data blocks, and transfers the data blocks to the first terminal apparatus by using the first response. The block sequence counter field is used to indicate a block sequence count of a data block included in the first response.

In addition, the 0x76 information further includes the file identifier field, used to load an identifier of the first file.

The 0x76 information further includes the data block field, which is used to load the data block in the first file.

If the first response includes a plurality of data blocks of the first file, the first response may include a plurality of file identifier fields and data block fields.

In this case, after receiving the first response, the first terminal apparatus may obtain the data blocks based on the data block field, and determine, based on the file identifier field, the files to which the data blocks belong. Further, the first terminal apparatus may determine a sequence count of the data block in the first file based on the block sequence counter field, so as to splice received data blocks based on the sequence count, so as to obtain a complete first file.

Through the foregoing steps, the first terminal apparatus may obtain the data blocks in the first file. In addition, because the first response includes the identifier of the first file, the first terminal apparatus may determine, by using the identifier, the file to which the data block belongs, so as to distinguish the received data blocks.

In addition, if the second terminal apparatus splits the first file into more than two data blocks, operations in step S24 and step S25 may be repeated between the first terminal apparatus and the second terminal apparatus, so that the first terminal apparatus obtains the more than two data blocks transferred by the second terminal apparatus, and obtains a complete first file by splicing the more than two data blocks.

In this embodiment of this application, the first terminal apparatus may further determine, based on the size of the first file included in the second response and the size of the data block received by the first terminal apparatus, whether the first terminal apparatus has received the complete first file. In this case, if the first terminal apparatus receives the complete first file, the following steps may be further included.

Step S26: The first terminal apparatus stores the one or more data blocks into the corresponding first files based on the identifiers of the first files respectively corresponding to the one or more data blocks.

In addition, after the first terminal apparatus determines, based on the sizes of the received one or more data blocks and the sizes of the first files corresponding to the one or more data blocks included in the second response, that transfer of the at least one first file is completed, the first terminal apparatus transfers the first termination information corresponding to the first target file.

The first target file is the at least one first file that has been completely transferred, and the first termination information is used to indicate to terminate transfer of the first target file.

According to a definition of the UDS protocol, the service identifier of the first termination information is usually 0x37. The following provides a format of information whose service identifier is 0x37 by using Table 7.

**Table 7**

| Definition of the first termination information (0x37) | | | |
|---|---|---|---|
| Byte | Parameter name | Agreement | Byte value |
| #1 | Service identifier | Necessary | 0x37 |
| #2 | File identifier | Self-defined | 0x00-0xFF |
| : | | | : |
| #5 | | | 0x00-0xFF |

In Table 7, the first column indicates a location of a byte occupied by each field in the first termination information. Specifically, it may be considered that the service identifier field occupies the first byte, the file identifier field occupies four bytes, and the four bytes are respectively the second byte to the fifth byte.

As shown in the foregoing table, the service identifier in the first termination information is usually 0x37, and the first termination information usually further includes an identifier of the first target file, so that the second terminal apparatus determines that transfer of the first target file needs to be terminated.

In addition, if the first target file includes a plurality of first files, the first termination information may include a plurality of file identifier fields.

Step S27: After receiving the first termination information, the second terminal apparatus transfers a termination response corresponding to the first termination information to the first terminal apparatus, and releases the identifier of the first target file.

After releasing the identifier, the second terminal apparatus may further allocate the identifier to another first file that needs to be transferred.

According to a definition of the UDS protocol, a response service identifier of the termination response corresponding to the first termination information is usually 0x77. The following provides a format of information whose service identifier is 0x77 by using Table 8.

**Table 8**

| Definition of the termination response (0x77 information) | | | |
|---|---|---|---|
| Byte | Parameter name | Agreement | Byte value |
| #1 | Response service identifier | Necessary | 0x77 |
| #2 | File identifier | Self-defined | 0x00-0xFF : |
| : | | | : |
| #5 | | | 0x00-0xFF |

In the example shown in Table 8, the response service identifier of the termination response is usually 0x77, and the termination response generally further includes an identifier of the first file to indicate to terminate transfer of the first file.

By using the foregoing steps, the first terminal apparatus may obtain the first file in the second terminal apparatus by using the UDS protocol.

Further, in this embodiment of this application, the first terminal apparatus supports obtaining the first file in a parallel transfer manner, and the first terminal apparatus may further obtain another file in a process of obtaining the first file. In this case, in this embodiment of this application, the following steps are included.

Step 1: The first terminal apparatus determines identifiers of one or more second files.

In this embodiment of this application, the identifier of the second file may be determined with reference to operations in step S21 and step S22. In this case, the first terminal apparatus may transfer a request corresponding to the second file to the second terminal apparatus, where the request may include parallel transfer indication information of the one or more second files. After receiving the request, the second terminal apparatus transfers a response corresponding to the request to the first terminal apparatus, where the response includes the identifiers of the one or more second files, so that the first terminal apparatus determines the identifiers of the one or more second files based on the response transferred by the second terminal apparatus.

Further, in this case, the response transferred by the second terminal apparatus to the first terminal apparatus may further include sizes of the second files.

In a feasible implementation, the request corresponding to the second file transferred by the first terminal apparatus to the second terminal apparatus is a request whose service identifier is 0x38. Correspondingly, a response service identifier of the response corresponding to the request transferred by the second terminal apparatus is 0x78.

Step 2: Before obtaining any complete first file, the first terminal apparatus transfers a third request to the second terminal apparatus, where the third request is used to request to obtain the one or more second files.

The third request includes related information of the one or more second files, so that the second terminal apparatus determines, based on the third request, files that the first terminal apparatus needs to obtain. The related information of the second files may include names of the second files and storage paths of the second files in the second terminal apparatus, or the related information of the second files may include the identifiers. This is not limited in this embodiment of this application.

After receiving the third request, the second terminal apparatus determines one or more data blocks corresponding to the one or more second files, generates a third response corresponding to the third request accordingly, and transfers the third response corresponding to the third request to the first terminal apparatus.

In the current technology, the first terminal apparatus can obtain a file only in a serial transfer manner. In this case, the first terminal apparatus can transfer a request for obtaining another file only after finishing obtaining the first file. However, in this embodiment of this application, before obtaining the complete first file, the first terminal apparatus may transfer the third request, so as to request to obtain the second file. In this case, the first terminal apparatus may simultaneously obtain the second file in a process of obtaining the first file, that is, implement parallel transfer of the first file and the second file.

Step 3: The first terminal apparatus receives the third response that is corresponding to the third request and sent by the second terminal apparatus, where the third response includes data blocks in the one or more second files and the identifiers.

Step 4: The first terminal apparatus stores the one or more data blocks into the corresponding second files based on the identifiers of the second files respectively corresponding to the one or more data blocks.

According to the foregoing steps, the first terminal apparatus may obtain the data block in the second file in a process of obtaining the data block in the first file. In other words, the first terminal apparatus may obtain at least two files in the second terminal apparatus in a parallel transfer manner, thereby improving efficiency of obtaining the files by the first terminal apparatus.

In addition, in this process, the first terminal apparatus may determine, based on the file identifier included in the response, the file to which each data block belongs, so as to avoid confusion of the data blocks. For example, if the first terminal apparatus receives the first response and the third response, the first terminal apparatus may determine, based on the identifier included in the first response, that the data block included in the first response belongs to the first file, and may further determine, based on the identifier included in the third response, that the data block included in the third response belongs to the second file.

Further, if the first terminal apparatus determines the identifier of the second file based on the response transferred by the second terminal apparatus, the response transferred by the second terminal apparatus may further include a size of the second file. In this case, the first terminal apparatus may determine, based on a size of a data block received by the first terminal apparatus and the size of the second file, whether a complete second file is received, and after determining that the first terminal apparatus receives the complete second file, transfer second termination information, where the second termination information is used to indicate to terminate transfer of the second file.

After receiving the second termination information, the second terminal apparatus may transfer a termination response corresponding to the second termination information, and release the identifier, so as to end a transfer process of the second file.

In addition, in this embodiment of this application, the first terminal apparatus usually further needs to obtain a third file in a third terminal apparatus, but the third terminal apparatus does not support parallel transfer. In this case, the method further includes the following steps.

Step 1: The first terminal apparatus transfers a fourth request to the third terminal apparatus, where the fourth request includes parallel transfer indication information of one or more third files.

According to the definition of the UDS protocol, the fourth request is generally UDS information whose service identifier is 0x38, and the fourth request may include a plurality of file path and name length fields, which are respectively used to indicate related information of the third files. For example, a format of the fourth request may be shown in Table 1.

Step 2: After receiving the fourth request, the third terminal apparatus transfers an error response to the fourth request to the first terminal apparatus, where the error response is used to indicate that the third terminal apparatus does not support parallel transfer.

If the third terminal apparatus does not support parallel transfer, after receiving the fourth request, the third terminal apparatus may transfer an error response. As defined in the UDS protocol, a response service identifier of the error response is 0x78, and the error response includes a negative response code. For example, the negative response code included in the error response may be shown in Table 4.

After receiving the error response, the first terminal apparatus may determine that the third terminal apparatus does not support parallel transfer. In this case, file transfer is performed between the first terminal apparatus and the third terminal apparatus in a serial transfer manner. For example, file transfer may be performed between the first terminal apparatus and the third terminal apparatus by using the procedure indicated in FIG. 4.

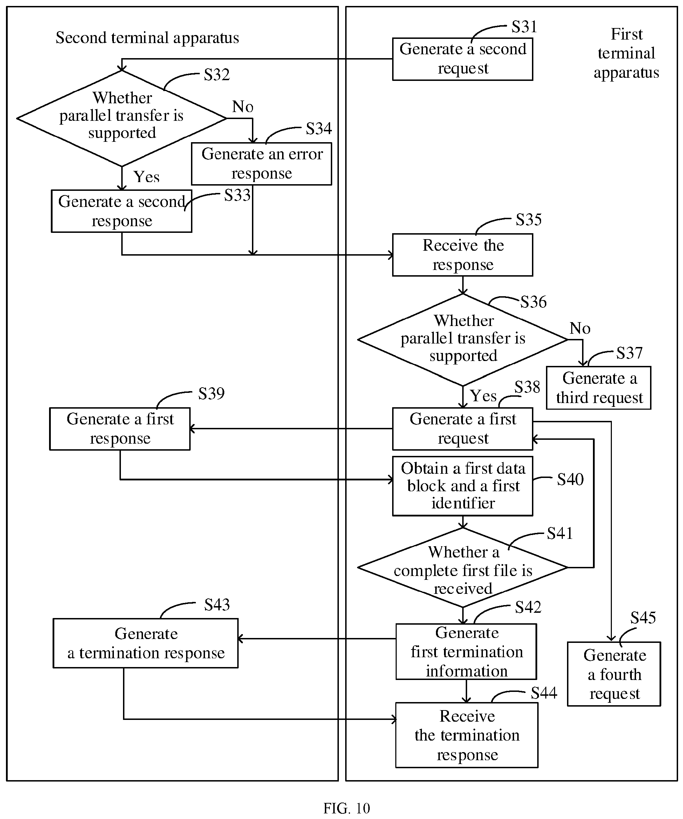

To clarify a file transfer process between a first terminal apparatus and a second terminal apparatus in embodiments of this application, the following discloses an embodiment. In a file transfer method provided in this embodiment, the first terminal apparatus is compatible with a serial transfer manner and a parallel transfer manner, and the second terminal apparatus is a terminal apparatus that supports parallel transfer, or the second terminal apparatus is a terminal apparatus that supports only serial transfer. In addition, the following further discloses FIG. 10. Refer to a schematic diagram of a working procedure shown in FIG. 10. The file transfer method disclosed in this embodiment of this application includes the following steps.

Step S31: The first terminal apparatus generates a second request, and transfers the second request to the second terminal apparatus, where the second request includes parallel transfer indication information of one or more first files.

The second request is usually used to indicate that the first terminal apparatus supports obtaining the one or more first files in a parallel transfer manner, and is used to request to obtain identifiers of the one or more first files.

In the solution provided in this embodiment of this application, a manner in which the first terminal apparatus obtains the file may include a serial transfer manner and a parallel transfer manner. In the parallel transfer manner, the first terminal apparatus may obtain at least two files at the same time. If the first terminal apparatus determines that the first terminal apparatus supports obtaining files in a parallel transfer manner, and needs to obtain the first file, the first terminal apparatus may transfer the second request.

Step S32: The second terminal apparatus receives the second request transferred by the first terminal apparatus, and determines whether the second terminal apparatus supports transferring the one or more first files to the first terminal apparatus in a parallel transfer manner; and if yes, perform the operation in step S33; or if no, perform the operation in step S34.

Step S33: If the second terminal apparatus supports transferring the at least one first file to the first terminal apparatus in a parallel transfer manner, the second terminal apparatus generates a second response corresponding to the second request, and the second terminal apparatus transfers the second response to the first terminal apparatus.

The second response includes the identifiers of the one or more first files, and the second response may further include sizes of the one or more first files.

Step S34: If the second terminal apparatus does not support transferring the first files to the first terminal apparatus in a parallel manner, generate an error response, and transfer the error response to the first terminal apparatus.

The error response is used to indicate that the second terminal apparatus does not support transferring the first files to the first terminal apparatus in a parallel transfer manner.

Step S35: The first terminal apparatus receives the response transferred by the second terminal apparatus.

The response transferred by the second terminal apparatus includes the second response corresponding to the second request, or includes the error response.

Step S36: The first terminal apparatus determines, based on the received response transferred by the second terminal apparatus, whether the first terminal apparatus can obtain the one or more first files in the second terminal apparatus in a parallel transfer manner; and if no, perform the operation in step S37; or if yes, perform the operation in step S38.

If the response received by the first terminal apparatus is the second response, the first terminal apparatus determines that the second terminal apparatus supports transferring the at least first file to the first terminal apparatus in the parallel transfer manner, that is, the first terminal apparatus may obtain the first file in the second terminal apparatus in the parallel transfer manner.

In addition, if the response received by the first terminal apparatus is the error response, the first terminal apparatus determines that the second terminal apparatus does not support transfer of the first file to the first terminal apparatus in the parallel transfer manner. Correspondingly, the first terminal apparatus cannot obtain the first file in the second terminal apparatus in the parallel transfer manner.

Step S37: The first terminal apparatus may transfer a fifth request after determining that the second terminal apparatus does not support transferring the first file to the first terminal apparatus in the parallel transfer manner.

The fifth request is used to indicate the first terminal apparatus to obtain the one or more first files in the serial transfer manner.

In this case, the first terminal apparatus and the second terminal apparatus may communicate with each other by using a serial transfer technology, that is, the first terminal apparatus obtains the first file in a serial transfer manner.

In addition, before transferring the fifth request, the first terminal apparatus may further transfer response information corresponding to the error response. Correspondingly, the second terminal apparatus may further receive the response information corresponding to the error response, and the second terminal apparatus determines, based on the response information, that the first terminal apparatus knows that the second terminal apparatus does not support transferring the first file in the parallel transfer manner.

Step S38: After determining that the second terminal apparatus supports transferring the first file to the first terminal apparatus in the parallel transfer manner, the first terminal apparatus generates a first request and transfers the first request.

The first request is used to request to obtain the one or more first files. The first request may include related information of the one or more first files. In a feasible implementation, the related information of the one or more first files includes identifiers of the one or more first files.

Step S39: After receiving the first request, the second terminal apparatus generates and transfers a first response corresponding to the first request.

The first response includes data blocks in the one or more first files and the identifiers.

In this step, the second terminal apparatus determines, based on the related information of the one or more first files included in the first request, the one or more first files that the first terminal apparatus needs to obtain, then splits the one or more first files into corresponding data blocks, generates the first response based on the data blocks, and transfers the first response to the first terminal apparatus.

Step S40: The first terminal apparatus receives the first response, and stores the one or more data blocks into the corresponding first files based on the identifiers of the first files respectively corresponding to the one or more data blocks.

Step S41: The first terminal apparatus determines, based on sizes of the one or more first files included in the second response and sizes of data blocks received by the first terminal apparatus, whether a complete first file is received; and if no, return to perform the operation of step S38; or if yes, perform the operation of step S42.

That is, in the solution provided in this embodiment of this application, if the first terminal apparatus determines that the first terminal apparatus does not receive a complete first file, the first terminal apparatus may generate a first request again, to request the second terminal apparatus to continue to transfer a data block to the first terminal apparatus.

Step S42: The first terminal apparatus transfers first termination information corresponding to a first target file after determining that at least one first file has been completely transferred.

The first target file is the at least one first file that has been completely transferred, and the first termination information is used to indicate to terminate transfer of the first target file.

Step S43: After receiving the first termination information, the second terminal apparatus generates a termination response corresponding to the first termination information, and transfers the termination response.

In addition, after receiving the first termination information, the second terminal apparatus may further release an identifier of the first target file. In this case, the second terminal apparatus may further allocate the released identifier to another file.

Step S44: The first terminal apparatus receives the termination response corresponding to the first termination information, and ends transfer of the first target file.

In addition, after obtaining the termination response, the first terminal apparatus may further transfer a corresponding response to the second terminal apparatus.

By using the foregoing steps, the first terminal apparatus may obtain the first file in the second terminal apparatus. In addition, in this example, the first terminal apparatus obtains the first file in a parallel transfer manner. In this case, the first terminal apparatus may further obtain another file in a process of obtaining the first file.

If the first terminal apparatus further needs to obtain a second file, in this embodiment of this application, the method may further include the following steps.

Step S45: The first terminal apparatus transfers a third request to the second terminal apparatus, where the third request is used to request one or more second files.

In this case, information exchange may be further performed between the first terminal apparatus and the second terminal apparatus with reference to the foregoing procedure.

The first terminal apparatus may transfer the third request in a process of transferring the first file, so that the first terminal apparatus can further obtain the one or more second files in a process of obtaining the first file, thereby implementing parallel transfer of the one or more first files and the one or more second files.

The following provides apparatus embodiments of this application that may be used to execute the method embodiments of this application. For details not disclosed in the apparatus embodiments of this application, refer to the method embodiments of this application.

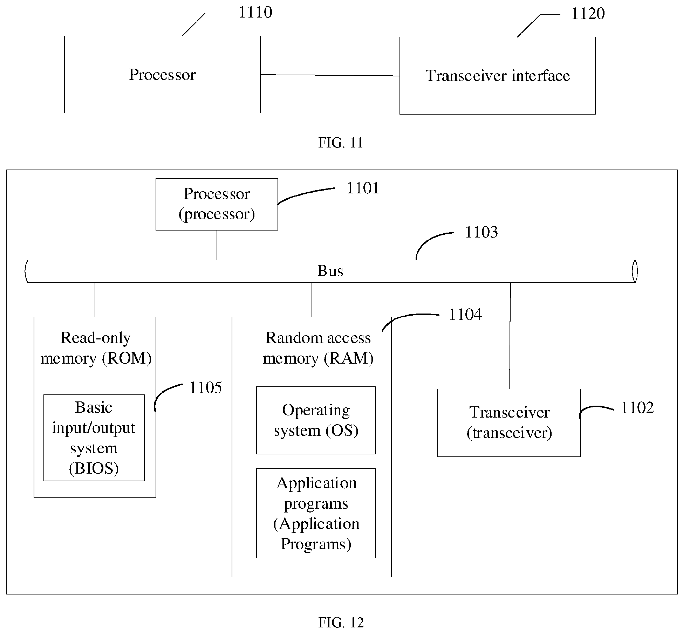

In implementation of the foregoing embodiments, an embodiment of this application discloses a file transfer apparatus. The file transfer apparatus may be applied to a first terminal apparatus, and the first terminal apparatus may be a terminal apparatus, in a vehicle diagnostic instrument and a vehicle-mounted terminal, that needs to obtain a first file. Refer to a schematic structural diagram shown in FIG. 11. The file transfer apparatus disclosed in this embodiment of this application includes a processor 1110 and a transceiver interface 1120.

The transceiver interface 1120 is configured to transfer a first request to a second terminal apparatus, and receive a first response of the second terminal apparatus to the first request, where the first request is used to request one or more first files, and the first response includes one or more data blocks and identifiers of first files respectively corresponding to the one or more data blocks.

The processor 1110 is configured to store the one or more data blocks into the corresponding first files based on the identifiers of the first files respectively corresponding to the one or more data blocks.

The one or more first files are generally files stored in the second terminal apparatus. In this case, the first terminal apparatus requests, by using the first request, to obtain the one or more first files from the second terminal apparatus.

After receiving the first request, the second terminal apparatus may determine, based on the first request, the one or more first files that the first terminal apparatus expects to obtain, and split each first file into one or more data blocks, and then the second terminal apparatus transfers the first response to the first terminal apparatus, so that the first terminal apparatus obtains the data blocks in the one or more first files, and stores the data blocks into the corresponding first files respectively.

According to the solution provided in embodiments of this application, the first terminal apparatus can simultaneously obtain, by using the first response, the data blocks included in the one or more first files, and can determine, based on the identifiers included in the first response, the files to which the obtained data blocks belong. If the first terminal apparatus requests a plurality of first files from the second terminal apparatus by using the first request, the first terminal apparatus may obtain a plurality of data blocks by using a first response, that is, the first terminal apparatus may obtain the first files in a parallel transfer manner.

Therefore, compared with the current technology, the solution provided in embodiments of this application improves efficiency of obtaining a file by the first terminal apparatus. In addition, in this embodiment of this application, the first terminal apparatus may obtain at least two files at the same time. Therefore, network bandwidth utilization can be further improved.

Further, the first terminal apparatus may be a vehicle diagnostic instrument, and the vehicle diagnostic instrument needs to implement vehicle diagnosis by using an obtained file. The solution in this application can improve efficiency of obtaining files by the first terminal apparatus. Therefore, a speed of obtaining files by the vehicle diagnostic instrument can be increased, diagnosis efficiency of the vehicle diagnostic instrument can be correspondingly improved, and a waiting time of a user who needs to obtain a vehicle diagnosis result is reduced.

In addition, because the diagnosis efficiency of the vehicle diagnostic instrument is improved, diagnosis efficiency of a diagnosis system including the vehicle diagnostic instrument and a vehicle-mounted terminal is correspondingly improved. In addition, in the solution provided in embodiments of this application, the diagnosis efficiency of the vehicle diagnostic instrument is improved, and a fault cause of a vehicle can be quickly determined, so as to complete vehicle fault rectification as soon as possible. Therefore, a fault time of the vehicle is reduced, and user experience of using the vehicle can be further improved.

Further, in the solution provided in embodiments of this application, the transceiver interface 1120 is further configured to transfer a second request to the second terminal apparatus, where the second request includes parallel transfer indication information of the one or more first files.

The transceiver interface 1120 is further configured to receive a second response of the second terminal apparatus to the second request, where the second response includes the identifiers of the one or more first files.

In the solution provided in embodiments of this application, the first terminal apparatus determines, based on an identifier of a first file corresponding to a data block, the first file to which the data block belongs. In this case, the identifier of the first file may be determined according to the foregoing solution.

Further, the second response further includes sizes of the one or more first files.

Further, the transceiver interface is further configured to: after the processor determines, based on sizes of the received one or more data blocks and the sizes that are of the first files corresponding to the one or more data blocks and that are included in the second response, that at least one first file has been completely transferred, transfer first termination information corresponding to a first target file, where the first target file is the at least one first file that has been completely transferred, and the first termination information is used to indicate to terminate transfer of the first target file.

In the foregoing manner, transfer of the first target file may be completed.

Further, the transceiver interface is further configured to transfer a third request to the second terminal apparatus, where the third request is used to request one or more second files.

The transceiver interface is further configured to receive a third response of the second terminal apparatus to the third request, where the third response includes one or more data blocks and identifiers of second files respectively corresponding to the one or more data blocks.

The processor is further configured to store the one or more data blocks into the corresponding second files based on the identifiers of the second files respectively corresponding to the one or more data blocks.

According to the foregoing solution, the first terminal apparatus may request to obtain the one or more second files by using the third request. If there are a plurality of second files, the first terminal apparatus may obtain the plurality of second files at the same time, that is, obtain the plurality of second files in a parallel transfer manner, thereby improving efficiency of file transfer between the first terminal apparatus and the second terminal apparatus.

Further, in the solution provided in embodiments of this application, the first terminal apparatus may further obtain the second file in a process of obtaining the first file. In addition, in this solution, even if the first terminal apparatus obtains data blocks of one or more first files and data blocks of one or more second files at the same time, the first terminal apparatus may determine, by using identifiers corresponding to the data blocks, a file to which each data block belongs. This does not cause confusion of the data blocks, implements parallel transfer of the first files and the second files, and further improves efficiency of obtaining files by the first terminal apparatus.

Further, the transceiver interface is further configured to transfer a fourth request to a third terminal apparatus, where the fourth request includes parallel transfer indication information of one or more third files.

The transceiver interface is further configured to receive an error response of the third terminal apparatus to the fourth request, and transfer a fifth request, where the error response is used to indicate that the third terminal apparatus does not support parallel transfer, and the fifth request is used to indicate that the first terminal apparatus obtains the one or more third files in a serial transfer manner.

According to the foregoing solution, in a case in which the third terminal apparatus does not support parallel transfer, the first terminal apparatus can still obtain the files in the third terminal apparatus, so that a file transfer manner of the first terminal apparatus is compatible with the serial transfer manner and the parallel transfer manner, and the first terminal apparatus can be applied to relatively diversified scenarios.

An embodiment of this application discloses a file transfer apparatus. The file transfer apparatus may be applied to a second terminal apparatus, and the second terminal apparatus may be a terminal apparatus, in a vehicle diagnostic instrument and a vehicle-mounted terminal, that stores a first file.

The file transfer apparatus includes:
a processor and a transceiver interface, where
the transceiver interface is configured to receive a first request transferred by a first terminal apparatus, where the first request is used to request one or more first files;
the processor is configured to generate a first response to the first request, where the first response includes one or more data blocks and identifiers of first files respectively corresponding to the one or more data blocks; and
the transceiver interface is further configured to send the first response to the first request to the first terminal apparatus.

Further, in the solution provided in embodiments of this application, the transceiver interface is further configured to receive a second request transferred by the first terminal apparatus, where the second request includes parallel transfer indication information of the one or more first files.

The transceiver interface is further configured to send a second response to the second request to the first terminal apparatus, where the second response includes the identifiers of the one or more first files.

Further, in the solution provided in embodiments of this application, the second response further includes sizes of the one or more first files.

Further, the transceiver interface is further configured to receive first termination information transferred by the first terminal apparatus, where the first termination information is used to indicate to terminate transfer of a first target file, and the first target file is a first file that has been completely transferred.

The transceiver interface is further configured to send a termination response to the first termination information to the first terminal apparatus, and release an identifier of the first target file.

Further, the transceiver interface is further configured to receive a third request transferred by the first terminal apparatus, where the third request is used to request one or more second files.

The transceiver interface is further configured to send a third response to the third request to the first terminal apparatus, where the third response includes one or more data blocks and identifiers of second files respectively corresponding to the one or more data blocks.

An embodiment of this application discloses a file transfer apparatus. The file transfer apparatus may be applied to a third terminal apparatus, and the third terminal apparatus stores third files.

The file transfer apparatus includes:
a processor and a transceiver interface, where
the transceiver interface is configured to receive a fourth request transferred by a first terminal apparatus, where the fourth request includes parallel transfer indication information of one or more third files;
the processor is configured to generate an error response to the fourth request, where the error response is used to indicate that the third terminal apparatus does not support parallel transfer; and
the transceiver interface is further configured to receive a fifth request transferred by the first terminal apparatus, where the fifth request is used to indicate that the first terminal apparatus obtains the one or more third files in a serial transfer manner.

Correspondingly, corresponding to the foregoing method, an embodiment of this application further discloses a terminal apparatus. Refer to a schematic structural diagram shown in FIG. 12. The terminal apparatus includes:
at least one processor 1101 and a memory; where
the memory is configured to store program instructions; and
the processor is configured to invoke and execute the program instructions stored in the memory, to enable the terminal apparatus to perform all or some of the steps in the embodiments corresponding to FIG. 5 and FIG. 6.

Further, the terminal apparatus may further include a transceiver 1102 and a bus 1103. The memory includes a random access memory 1104 and a read-only memory 1105.

The processor is coupled to the transceiver, the random access memory, and the read-only memory through the bus. When the terminal apparatus needs to be run, the terminal apparatus is started by using a basic input/output system built in the read-only memory or by using a bootloader boot system in an embedded system, to boot the terminal apparatus to a normal running state. After the terminal apparatus enters the normal running state, an application program and an operating system run in the random access memory, so that the terminal apparatus performs all or a part of the steps in the embodiments corresponding to FIG. 5 and FIG. 6.

The apparatus in this embodiment of the present invention may correspond to the file transfer apparatus in the embodiments corresponding to FIG. 5 and FIG. 6. In addition, the processor and the like in the apparatus may implement functions of the file transfer apparatus in the embodiments corresponding to FIG. 5 and FIG. 6 or various steps and methods implemented by the file transfer apparatus. For brevity, details are not described herein again.

Correspondingly, corresponding to the foregoing method, an embodiment of this application further discloses a terminal apparatus. The terminal apparatus includes:
at least one processor and a memory; where
the memory is configured to store program instructions; and
the processor is configured to invoke and execute the program instructions stored in the memory, to enable the terminal apparatus to perform all or some of the steps in the embodiment corresponding to FIG and FIG. 7.

Further, the terminal apparatus may further include a transceiver and a bus, and the memory includes a random access memory and a read-only memory.

The processor is coupled to the transceiver, the random access memory, and the read-only memory through the bus. When the terminal apparatus needs to be run, the terminal apparatus is started by using a basic input/output system built in the read-only memory or by using a bootloader boot system in an embedded system, to boot the terminal apparatus to a normal running state. After the terminal apparatus enters the normal running state, an application program and an operating system run in the random access memory, so that the terminal apparatus performs all or a part of the steps in the embodiment corresponding to FIG. 7.

The apparatus in this embodiment of the present invention may correspond to the file transfer apparatus in the embodiment corresponding to FIG. 7, and the processor in the apparatus may implement functions of the file transfer apparatus in the embodiment corresponding to FIG. 7 or various steps and methods implemented by the file transfer apparatus. For brevity, details are not described herein again.

Correspondingly, corresponding to the foregoing method, an embodiment of this application further discloses a terminal apparatus. The terminal apparatus includes:
at least one processor and a memory; where
the memory is configured to store program instructions; and
the processor is configured to invoke and execute the program instructions stored in the memory, to enable the terminal apparatus to perform all or some of the steps in the embodiment corresponding to FIG. 8.

Further, the terminal apparatus may further include a transceiver and a bus, and the memory includes a random access memory and a read-only memory.

The processor is coupled to the transceiver, the random access memory, and the read-only memory through the bus. When the terminal apparatus needs to be run, the terminal apparatus is started by using a basic input/output system built in the read-only memory or by using a bootloader boot system in an embedded system, to boot the terminal apparatus to a normal running state. After the terminal apparatus enters the normal running state, an application program and an operating system run in the random access memory, so that the terminal apparatus performs all or a part of the steps in the embodiment corresponding to FIG. 8.

The apparatus in this embodiment of the present invention may correspond to the file transfer apparatus in the embodiment corresponding to FIG. 8, and the processor in the apparatus may implement functions of the file transfer apparatus in the embodiment corresponding to FIG. 8 or various steps and methods implemented by the file transfer apparatus. For brevity, details are not described herein again.

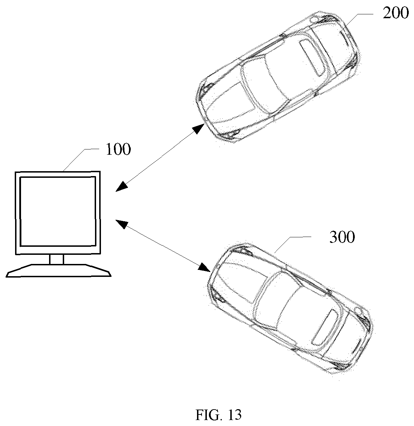

An embodiment of this application provides a file transfer system. Refer to the schematic diagram shown in FIG. 13. The file transfer system includes a first terminal apparatus 100 and a second terminal apparatus 200.

The first terminal apparatus 100 includes a file transfer apparatus, and the file transfer apparatus may correspond to the file transfer apparatus in the embodiments corresponding to FIG. 5 and FIG. 6. In addition, a processor and the like in the apparatus may implement functions of the file transfer apparatus in the embodiments corresponding to FIG. 5 and FIG. 6 or various steps and methods implemented by the file transfer apparatus. For brevity, details are not described herein again.

The second terminal apparatus 200 includes a file transfer apparatus, and the file transfer apparatus may correspond to the file transfer apparatus in the embodiment corresponding to FIG. 7. In addition, a processor and the like in the apparatus may implement functions of the file transfer apparatus in the embodiment corresponding to FIG. 7 or various steps and methods implemented by the file transfer apparatus. For brevity, details are not described herein again.

In the file transfer system provided in this embodiment of this application, the first terminal apparatus 100 may obtain one or more data blocks by using a first response transferred by the second terminal apparatus 200. In other words, the first terminal apparatus 100 may obtain one or more first files in the second terminal apparatus 200 in a parallel transfer manner.

Therefore, compared with the current technology, the solution provided in embodiments of this application improves efficiency of obtaining a file by the first terminal apparatus. In addition, in this embodiment of this application, the first terminal apparatus may obtain at least two files at the same time. Therefore, network bandwidth utilization can be further improved.

Further, the first terminal apparatus may be a vehicle diagnostic instrument, and the vehicle diagnostic instrument needs to implement vehicle diagnosis by using an obtained file. The solution in this application can improve efficiency of obtaining files by the first terminal apparatus. Therefore, a speed of obtaining files by the vehicle diagnostic instrument can be increased, diagnosis efficiency of the vehicle diagnostic instrument can be correspondingly improved, and a waiting time of a user who needs to obtain a vehicle diagnosis result is reduced.

In addition, because the diagnosis efficiency of the vehicle diagnostic instrument is improved, diagnosis efficiency of a diagnosis system including the vehicle diagnostic instrument and a vehicle-mounted terminal is correspondingly improved. In addition, in the solution provided in embodiments of this application, the diagnosis efficiency of the vehicle diagnostic instrument is improved, and a fault cause of a vehicle can be quickly determined, so as to complete vehicle fault rectification as soon as possible. Therefore, a fault time of the vehicle is reduced, and user experience of using the vehicle can be further improved.

Further, the file transfer system further includes a third terminal apparatus 300. The third terminal apparatus 300 includes a file transfer apparatus, and the file transfer apparatus may correspond to the file transfer apparatus in the embodiment corresponding to FIG. 8. In addition, a processor and the like in the apparatus may implement functions of the file transfer apparatus in the embodiment corresponding to FIG. 8 or various steps and methods implemented by the file transfer apparatus. For brevity, details are not described herein again.

In this embodiment of this application, the third terminal apparatus 300 does not support a parallel transfer manner. In this case, file transfer may be implemented between the first terminal apparatus 100 and the third terminal apparatus 300 in a serial transfer manner.

Therefore, in the file transfer system provided in this embodiment of this application, if a third terminal apparatus that does not support the parallel transfer manner exists, the first terminal apparatus can still obtain a file in the third terminal apparatus. In addition, a file transfer manner of the first terminal apparatus is compatible with two manners: serial transfer and parallel transfer, so that the first terminal apparatus is applied to relatively diversified scenarios.

In addition, in FIG. 13, the first terminal apparatus 100 is in a form of a vehicle diagnostic instrument, and the second terminal apparatus 200 and the third terminal apparatus 300 each are in a form of a vehicle-mounted terminal. In this case, the vehicle diagnostic instrument may obtain files in the vehicle-mounted terminals.

If the vehicle-mounted terminal needs to obtain a file in the vehicle diagnostic instrument, the first terminal apparatus 100 is the vehicle-mounted terminal, and the second terminal apparatus 200 and the third terminal apparatus 300 are vehicle diagnostic instruments.

During specific implementation, an embodiment of this application further provides a computer-readable storage medium. The computer-readable storage medium includes instructions. When the computer-readable medium disposed in any device runs on a computer, all or some of the steps in the embodiments corresponding to FIG. 5 and FIG. 6 may be implemented. A storage medium of the computer-readable medium may be: a magnetic disk, an optical disc, a read-only memory (ROM), a random access memory (RAM), or the like.

During specific implementation, an embodiment of this application further provides a computer-readable storage medium. The computer-readable storage medium includes instructions. When the computer-readable medium disposed in any device runs on a computer, all or some of the steps in the embodiment corresponding to FIG. 7 may be implemented. A storage medium of the computer-readable medium may be: a magnetic disk, an optical disc, a ROM, a RAM, or the like.

During specific implementation, an embodiment of this application further provides a computer-readable storage medium. The computer-readable storage medium includes instructions. When the computer-readable medium disposed in any device runs on a computer, all or some of the steps in the embodiment corresponding to FIG. 8 may be implemented. A storage medium of the computer-readable medium may be: a magnetic disk, an optical disc, a ROM, a RAM, or the like.

In addition, another embodiment of this application further discloses a computer program product including instructions. When the computer program product runs on an electronic device, the electronic device is enabled to perform all or some of the steps in the embodiments corresponding to FIG. 5 and FIG. 6.

Correspondingly, another embodiment of this application further discloses a computer program product including instructions. When the computer program product runs on an electronic device, the electronic device is enabled to perform all or some of the steps in the embodiment corresponding to FIG. 7.

In addition, another embodiment of this application further discloses a computer program product including instructions. When the computer program product runs on an electronic device, the electronic device is enabled to perform all or some of the steps in the embodiment corresponding to FIG. 8.

The various illustrative logical units and circuits described in the embodiments of this application may implement or operate the described functions by using a general-purpose processor, a digital information processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital information processor and a microprocessor, a plurality of microprocessors, one or more microprocessors with a digital information processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Alternatively, the storage medium may be integrated into a processor. The processor and the storage medium may be disposed in an ASIC, and the ASIC may be disposed in UE. Optionally, the processor and the storage medium may be disposed in different components of the UE.

It should be understood that sequence numbers of the processes do not mean an execution sequence in various embodiments of this application. The execution sequence of the processes should be determined based on functions and internal logic of the processes, and should not be construed as any limitation on implementation processes of embodiments of this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transferred from a computer-readable storage medium to another computer-readable storage medium. For example, the computer instructions may be transferred from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid state disk (Solid State Disk, SSD)), or the like.

For same or similar parts in embodiments in this specification, refer to these embodiments. Each embodiment focuses on a difference from other embodiments. Especially, the apparatus and system embodiments are basically similar to the method embodiments, and therefore are described briefly. For related parts, refer to descriptions in the method embodiments.

A person skilled in the art may clearly understand that, the technologies in embodiments of the present invention may be implemented by software in addition to a necessary general hardware platform. Based on such an understanding, the technical solutions of embodiments of the present invention essentially or the part contributing to the current technology may be implemented in a form of a software product. The computer software product is stored in a storage medium, such as a ROM/RAM, a hard disk, or an optical disc, and includes several instructions for instructing a computer device (which may be a personal computer, a server, or a network device) to perform the methods described in embodiments or some parts of embodiments of the present invention.

For same or similar parts in the embodiments of this specification, refer to each other. Especially, the file transfer apparatus embodiments disclosed in this application are basically similar to the method embodiment, and therefore are described briefly. For related parts, refer to descriptions in the method embodiment.

The foregoing descriptions are implementations of the present invention, but are not intended to limit the protection scope of the present invention.

## Claims

1. A file transfer method, comprising:
transferring (S11), by a first terminal apparatus, a first request to a second terminal apparatus, wherein the first request is used to request one or more first files, and comprises a first service identifier of the unified diagnostic services, UDS, protocol;
receiving (S12), by the first terminal apparatus, a first response of the second terminal apparatus to the first request, wherein the first response comprises one or more data blocks, a second service identifier of the UDS protocol, and identifiers of first files respectively corresponding to the one or more data blocks; and
storing (S13), by the first terminal apparatus, the one or more data blocks into the corresponding first files based on the identifiers of the first files respectively corresponding to the one or more data blocks,
**characterized in that** the method further comprises:
transferring (S14), by the first terminal apparatus, a second request to the second terminal apparatus, wherein the second request comprises parallel transfer indication information of the one or more first files, and a third service identifier of the UDS protocol; and
receiving (S15), by the first terminal apparatus, a second response of the second terminal apparatus to the second request, wherein the second response comprises the identifiers of the one or more first files,
wherein the parallel transfer indication information is used to indicate that the first terminal apparatus supports obtaining the one or more first files in a parallel transfer manner, and is used to request to obtain the identifiers of the one or more first files,
wherein the first terminal apparatus receives, from the second terminal apparatus, the first response by obtaining the plurality of data blocks in the plurality of first files in the parallel transfer manner.

2. The method according to claim 1, wherein
the second response further comprises sizes of the one or more first files.

3. The method according to claim 2, wherein the method further comprises:
after the first terminal apparatus determines, based on sizes of the received one or more data blocks and the sizes that are of the first files corresponding to the one or more data blocks and that are comprised in the second response, that at least one first file has been completely transferred, transferring, by the first terminal apparatus, first termination information corresponding to a first target file, wherein the first target file is the at least one first file that has been completely transferred, and the first termination information is used to indicate to terminate transfer of the first target file.

4. The method according to any one of claims 1 to 3, wherein the method further comprises:
transferring, by the first terminal apparatus, a third request to the second terminal apparatus, wherein the third request is used to request one or more second files;
receiving, by the first terminal apparatus, a third response of the second terminal apparatus to the third request, wherein the third response comprises one or more data blocks and identifiers of second files respectively corresponding to the one or more data blocks; and
storing, by the first terminal apparatus, the one or more data blocks into the corresponding second files based on the identifiers of the second files respectively corresponding to the one or more data blocks.

5. The method according to any one of claims 1 to 3, wherein the method further comprises:
transferring, by the first terminal apparatus, a fourth request to a third terminal apparatus, wherein the fourth request comprises parallel transfer indication information of one or more third files;
receiving, by the first terminal apparatus, an error response of the third terminal apparatus to the fourth request, wherein the error response is used to indicate that the third terminal apparatus does not support parallel transfer; and
transferring, by the first terminal apparatus, a fifth request, wherein the fifth request is used to indicate that the first terminal apparatus supports obtaining the one or more third files in a serial transfer manner.

6. A file transfer method, comprising:
receiving (S17), by a second terminal apparatus, a first request transferred by a first terminal apparatus, wherein the first request is used to request one or more first files, and comprises a first service identifier of the unified diagnostic services, UDS, protocol; and
sending (S18), by the second terminal apparatus, a first response to the first request to the first terminal apparatus, wherein the first response comprises one or more data blocks, a second service identifier of the UDS protocol, and identifiers of first files respectively corresponding to the one or more data blocks.
**characterized in that** the method further comprises:
receiving, by the second terminal apparatus, a second request transferred by the first terminal apparatus, wherein the second request comprises parallel transfer indication information of the one or more first files, and a third service identifier of the UDS protocol; and
sending, by the second terminal apparatus, a second response to the second request to the first terminal apparatus, wherein the second response comprises the identifiers of the one or more first files,
wherein the parallel transfer indication information is used to indicate that the first terminal apparatus supports obtaining the one or more first files in a parallel transfer manner, and is used to request to obtain the identifiers of the one or more first files,
wherein the second terminal apparatus sends, to the first terminal apparatus, the first response by transferring the plurality of data blocks in the plurality of first files in the parallel transfer manner.

7. The method according to claim 6, wherein
the second response further comprises sizes of the one or more first files.

8. The method according to claim 6 or 7, wherein the method further comprises:
receiving, by the second terminal apparatus, first termination information transferred by the first terminal apparatus, wherein the first termination information is used to indicate to terminate transfer of a first target file, and the first target file is a first file that has been completely transferred; and
sending, by the second terminal apparatus to the first terminal apparatus, a termination response to the first termination information, and releasing an identifier of the first target file.

9. The method according to claim 6 or 7, wherein the method further comprises:
receiving, by the second terminal apparatus, a third request transferred by the first terminal apparatus, wherein the third request is used to request one or more second files; and
sending, by the second terminal apparatus, a third response to the third request to the first terminal apparatus, wherein the third response comprises one or more data blocks and identifiers of second files respectively corresponding to the one or more data blocks.

10. A terminal apparatus, comprising:
at least one processor and a memory; wherein
the memory is configured to store program instructions; and
the processor is configured to invoke and execute the program instructions stored in the memory, to enable the terminal apparatus to perform the file transfer method according to any one of claims 1 to 5.

11. A terminal apparatus, comprising:
at least one processor and a memory; wherein
the memory is configured to store program instructions; and
the processor is configured to invoke and execute the program instructions stored in the memory, to enable the terminal apparatus to perform the file transfer method according to any one of claims 6 to 9.

12. A file transfer system, comprising:
a first terminal apparatus and a second terminal apparatus, wherein
the first terminal apparatus comprises the file transfer apparatus according to claim 10; and
the second terminal apparatus comprises the file transfer apparatus according to claim 11.

13. The system according to claim 12, wherein the system further comprises:
a third terminal apparatus, wherein
the third terminal apparatus is configured to:
receive a fourth request transferred by the first terminal apparatus, wherein the fourth request comprises parallel transfer indication information of one or more third files;
generate an error response to the fourth request, wherein the error response is used to indicate that the third terminal apparatus does not support parallel transfer; and
receive a fifth request transferred by the first terminal apparatus, wherein the fifth request is used to indicate that the first terminal apparatus supports obtaining the one or more third files in a serial transfer manner.

14. A computer-readable storage medium, wherein
the computer-readable storage medium stores instructions, and when the instructions are run on a computer, the computer is enabled to perform the file transfer method according to any one of claims 1 to 5.

15. A computer-readable storage medium, wherein
the computer-readable storage medium stores instructions, and when the instructions are run on a computer, the computer is enabled to perform the file transfer method according to any one of claims 6 to 9.

## Patentansprüche

1. Dateiübertragungsverfahren, umfassend:
Übertragen (S11), durch eine Endgeräteinrichtung, einer ersten Anforderung an eine zweite Endgeräteinrichtung, wobei die erste Anforderung verwendet wird, um eine oder mehrere erste Dateien anzufordern, und eine erste Dienstkennung des UDS ("Unified Diagnostic Services", vereinheitlichter Diagnosedienst) -Protokolls umfasst;
Empfangen (S12), durch die erste Endgeräteinrichtung, einer ersten Antwort der zweiten Endgeräteinrichtung auf die erste Anforderung, wobei die erste Antwort einen oder mehrere Datenblöcke, eine zweite Dienstkennung des UDS-Protokolls und Kennungen von ersten Dateien, die jeweils den ein oder mehreren Datenblöcken entsprechen, umfasst; und
Speichern (S13), durch die erste Endgeräteinrichtung, der ein oder mehreren Datenblöcke in die entsprechenden ersten Dateien basierend auf den Kennungen der ersten Dateien, die jeweils den ein oder mehreren Datenblöcken entsprechen,
**dadurch gekennzeichnet, dass** das Verfahren ferner umfasst:
Übertragen (S14), durch die erste Endgeräteinrichtung, einer zweiten Anforderung an die zweite Endgeräteinrichtung, wobei die zweite Anforderung Parallelübertragungs-Anzeigeinformationen der ein oder mehreren ersten Dateien und eine dritte Dienstkennung des UDS-Protokolls umfasst; und
Empfangen (S15), durch die erste Endgeräteinrichtung, einer zweiten Antwort der zweiten Endgeräteinrichtung auf die zweite Anforderung, wobei die zweite Antwort die Kennungen der ein oder mehreren ersten Dateien umfasst,
wobei die Parallelübertragungs-Anzeigeinformationen verwendet werden, um anzuzeigen, dass die erste Endgeräteinrichtung das Erhalten der ein oder mehreren ersten Dateien in einer parallelen Übertragungsweise unterstützt, und verwendet werden, um das Erhalten der Kennungen der ein oder mehreren ersten Dateien anzufordern,
wobei die erste Endgeräteinrichtung von der zweiten Endgeräteinrichtung die erste Antwort empfängt, indem sie die mehreren Datenblöcke in den mehreren ersten Dateien in der parallelen Übertragungsweise erhält.

2. Verfahren gemäß Anspruch 1, wobei
die zweite Antwort ferner die Größen der ein oder mehreren ersten Dateien umfasst.

3. Verfahren gemäß Anspruch 2, wobei das Verfahren ferner umfasst:
nachdem die erste Endgeräteinrichtung bestimmt, basierend auf den Größen der empfangenen ein oder mehreren Datenblöcke und den Größen der ersten Dateien, die den ein oder mehreren Datenblöcken entsprechen und die in der zweiten Antwort enthalten sind, dass wenigstens eine erste Datei vollständig übertragen wurde, Übertragen, durch die erste Endgeräteinrichtung, erster Beendigungsinformationen, die einer ersten Zieldatei entsprechen, wobei die erste Zieldatei die wenigstens eine erste Datei ist, die vollständig übertragen wurde, und die ersten Beendigungsinformationen verwendet werden, um anzuzeigen, dass die Übertragung der ersten Zieldatei beendet werden soll.

4. Verfahren gemäß einem der Ansprüche 1 bis 3, wobei das Verfahren ferner umfasst:
Übertragen, durch die erste Endgeräteinrichtung, einer dritten Anforderung an die zweite Endgeräteinrichtung, wobei die dritte Anforderung verwendet wird, um eine oder mehrere zweite Dateien anzufordern;
Empfangen, durch die erste Endgeräteinrichtung, einer dritten Antwort der zweiten Endgeräteinrichtung auf die dritte Anforderung, wobei die dritte Antwort einen oder mehrere Datenblöcke und Kennungen von zweiten Dateien, die jeweils den ein oder mehreren Datenblöcken entsprechen, umfasst; und
Speichern, durch die erste Endgeräteinrichtung, der ein oder mehreren Datenblöcke in die entsprechenden zweiten Dateien basierend auf den Kennungen der zweiten Dateien, die jeweils den ein oder mehreren Datenblöcken entsprechen,

5. Verfahren gemäß einem der Ansprüche 1 bis 3, wobei das Verfahren ferner umfasst:
Übertragen, durch die erste Endgeräteinrichtung, einer vierten Anforderung an eine dritte Endgeräteinrichtung, wobei die vierte Anforderung Parallelübertragungs-Anzeigeinformationen einer oder mehrerer dritter Dateien umfasst;
Empfangen, durch die erste Endgeräteinrichtung, einer Fehlerantwort der dritten Endgeräteinrichtung auf die vierte Anforderung, wobei die Fehlerantwort verwendet wird, um anzuzeigen, dass die dritte Endgeräteinrichtung parallele Übertragung nicht unterstützt; und
Übertragen, durch die erste Endgeräteinrichtung, einer fünften Anforderung, wobei die fünfte Anforderung verwendet wird, um anzuzeigen, dass die erste Endgeräteinrichtung das Erhalten der ein oder mehreren dritten Dateien in einer seriellen Übertragungsweise unterstützt.

6. Dateiübertragungsverfahren, umfassend:
Empfangen (S17), durch eine zweite Endgeräteinrichtung, einer ersten Anforderung, die von einer ersten Endgeräteinrichtung übertragen wird, wobei die erste Anforderung verwendet wird, um eine oder mehrere erste Dateien anzufordern, und eine erste Dienstkennung des UDS ("Unified Diagnostic Services", vereinheitlichter Diagnosedienst) -Protokolls umfasst; und
Senden (S18), durch die zweite Endgeräteinrichtung, einer ersten Antwort auf die erste Anforderung an die erste Endgeräteinrichtung, wobei die erste Antwort einen oder mehrere Datenblöcke, eine zweite Dienstkennung des UDS-Protokolls und Kennungen von ersten Dateien, die jeweils den ein oder mehreren Datenblöcken entsprechen, umfasst,
**dadurch gekennzeichnet, dass** das Verfahren ferner umfasst:
Empfangen, durch die zweite Endgeräteinrichtung, einer zweiten Anforderung, die von der ersten Endgeräteinrichtung übertragen wird, wobei die zweite Anforderung Parallelübertragungs-Anzeigeinformationen der ein oder mehreren ersten Dateien und eine dritte Dienstkennung des UDS-Protokolls umfasst; und
Senden, durch die zweite Endgeräteinrichtung, einer zweiten Antwort auf die zweite Anforderung an die erste Endgeräteinrichtung, wobei die zweite Antwort die Kennungen der ein oder mehreren ersten Dateien umfasst,
wobei die Parallelübertragungs-Anzeigeinformationen verwendet werden, um anzuzeigen, dass die erste Endgeräteinrichtung das Erhalten der ein oder mehreren ersten Dateien in einer parallelen Übertragungsweise unterstützt, und verwendet werden, um das Erhalten der Kennungen der ein oder mehreren ersten Dateien anzufordern,
wobei die zweite Endgeräteinrichtung an die erste Endgeräteinrichtung die erste Antwort sendet, indem sie die mehreren Datenblöcke in den mehreren ersten Dateien in der parallelen Übertragungsweise überträgt.

7. Verfahren gemäß Anspruch 6, wobei
die zweite Antwort ferner die Größen der ein oder mehreren ersten Dateien umfasst.

8. Verfahren gemäß Anspruch 6 oder 7, wobei das Verfahren ferner umfasst:
Empfangen, durch die zweite Endgeräteinrichtung, erster Beendigungsinformationen, die von der ersten Endgeräteinrichtung übertragen werden, wobei die ersten Beendigungsinformationen verwendet werden, um anzuzeigen, dass die Übertragung einer ersten Zieldatei beendet werden soll, und die erste Zieldatei eine erste Datei ist, die vollständig übertragen wurde; und
Senden, durch die zweite Endgeräteinrichtung an die erste Endgeräteinrichtung, einer Beendigungsantwort auf die ersten Beendigungsinformationen und Freigeben einer Kennung der ersten Zieldatei.

9. Verfahren gemäß Anspruch 6 oder 7, wobei das Verfahren ferner umfasst:
Empfangen, durch die zweite Endgeräteinrichtung, einer dritten Anforderung, die von der ersten Endgeräteinrichtung übertragen wird, wobei die dritte Anforderung verwendet wird, um eine oder mehrere zweite Dateien anzufordern; und
Senden, durch die zweite Endgeräteinrichtung, einer dritten Antwort auf die dritte Anforderung an die erste Endgeräteinrichtung, wobei die dritte Antwort einen oder mehrere Datenblöcke und Kennungen von zweiten Dateien, die jeweils den ein oder mehreren Datenblöcken entsprechen, umfasst.

10. Endgeräteinrichtung, umfassend:
wenigstens einen Prozessor und einen Speicher; wobei
der Speicher dafür ausgelegt ist, Programmanweisungen zu speichern; und
wobei der Prozessor dafür ausgelegt ist, die im Speicher gespeicherten Programmanweisungen aufzurufen und auszuführen, um die Endgeräteinrichtung zu befähigen, das Dateiübertragungsverfahren gemäß einem der Ansprüche 1 bis 5 durchzuführen.

11. Endgeräteinrichtung, umfassend:
wenigstens einen Prozessor und einen Speicher; wobei
der Speicher dafür ausgelegt ist, Programmanweisungen zu speichern; und
wobei der Prozessor dafür ausgelegt ist, die im Speicher gespeicherten Programmanweisungen aufzurufen und auszuführen, um die Endgeräteinrichtung zu befähigen, das Dateiübertragungsverfahren gemäß einem der Ansprüche 6 bis 9 durchzuführen.

12. Dateiübertragungssystem, umfassend:
eine erste Endgeräteinrichtung und eine zweite Endgeräteinrichtung, wobei
die erste Endgeräteinrichtung die Dateiübertragungseinrichtung gemäß Anspruch 10 umfasst; und
die zweite Endgeräteinrichtung die Dateiübertragungseinrichtung gemäß Anspruch 11 umfasst.

13. System gemäß Anspruch 12, wobei das System ferner umfasst:
eine dritte Endgeräteinrichtung, wobei
die dritte Endgeräteinrichtung ausgelegt ist zum:
Empfangen einer vierten Anforderung, die von der ersten Endgeräteinrichtung übertragen wird, wobei die vierte Anforderung Parallelübertragungs-Anzeigeinformationen einer oder mehrerer dritter Dateien umfasst;
Erzeugen einer Fehlerantwort auf die vierte Anforderung, wobei die Fehlerantwort verwendet wird, um anzuzeigen, dass die dritte Endgeräteinrichtung parallele Übertragung nicht unterstützt; und
Empfangen einer fünften Anforderung, die von der ersten Endgeräteinrichtung übertragen wird, wobei die fünfte Anforderung verwendet wird, um anzuzeigen, dass die erste Endgeräteinrichtung das Erhalten der ein oder mehreren dritten Dateien in einer seriellen Übertragungsweise unterstützt.

14. Computerlesbares Speichermedium, wobei
das computerlesbare Speichermedium Anweisungen speichert, und wenn die Anweisungen auf einem Computer ausgeführt werden, der Computer befähigt wird, das Dateiübertragungsverfahren gemäß einem der Ansprüche 1 bis 5 durchzuführen.

15. Computerlesbares Speichermedium, wobei
das computerlesbare Speichermedium Anweisungen speichert, und wenn die Anweisungen auf einem Computer ausgeführt werden, der Computer befähigt wird, das Dateiübertragungsverfahren gemäß einem der Ansprüche 6 bis 9 durchzuführen.

## Revendications

1. Procédé de transfert de fichier, comprenant :
le transfert (S11), par un premier appareil terminal, d'une première requête à un deuxième appareil terminal, la première requête étant utilisée pour demander un ou plusieurs premiers fichiers, et comprenant un premier identifiant de service du protocole de services de diagnostic unifiés, UDS ;
la réception (S12), par le premier appareil terminal, d'une première réponse du deuxième appareil terminal à la première requête, la première réponse comprenant un ou plusieurs blocs de données, un deuxième identifiant de service du protocole UDS, et des identifiants de premiers fichiers correspondant respectivement au ou aux blocs de données ; et
le stockage (S13), par le premier appareil terminal, du ou des blocs de données dans les premiers fichiers correspondants sur la base des identifiants des premiers fichiers correspondant respectivement au ou aux blocs de données,
**caractérisé en ce que** le procédé comprend en outre :
le transfert (S14), par le premier appareil terminal, d'une deuxième requête au deuxième appareil terminal, la deuxième requête comprenant des informations d'indication de transfert parallèle du ou des premiers fichiers, et un troisième identifiant de service du protocole UDS ; et
la réception (S15), par le premier appareil terminal, d'une deuxième réponse du deuxième appareil terminal à la deuxième requête, la deuxième réponse comprenant les identifiants du ou des premiers fichiers,
les informations d'indication de transfert parallèle étant utilisées pour indiquer que le premier appareil terminal prend en charge l'obtention du ou des premiers fichiers d'une manière de transfert parallèle, et étant utilisées pour demander l'obtention des identifiants du ou des premiers fichiers,
le premier appareil terminal recevant, du deuxième appareil terminal, la première réponse en obtenant la pluralité de blocs de données dans la pluralité de premiers fichiers selon la manière de transfert parallèle.

2. Procédé selon la revendication 1,
la deuxième réponse comprenant en outre des tailles du ou des premiers fichiers.

3. Procédé selon la revendication 2, le procédé comprenant en outre :
après que le premier appareil terminal détermine, sur la base des tailles du ou des blocs de données reçus et des tailles qui sont des premiers fichiers correspondant au ou aux blocs de données et qui sont comprises dans la deuxième réponse, qu'au moins un premier fichier a été complètement transféré, le transfert, par le premier appareil terminal, de premières informations de terminaison correspondant à un premier fichier cible, le premier fichier cible étant l'au moins un premier fichier qui a été complètement transféré, et les premières informations de terminaison étant utilisées pour indiquer de terminer le transfert du premier fichier cible.

4. Procédé selon l'une quelconque des revendications 1 à 3, le procédé comprenant en outre :
le transfert, par le premier appareil terminal, d'une troisième requête au deuxième appareil terminal, la troisième requête étant utilisée pour demander un ou plusieurs deuxièmes fichiers ;
la réception, par le premier appareil terminal, d'une troisième réponse du deuxième appareil terminal à la troisième requête, la troisième réponse comprenant un ou plusieurs blocs de données et des identifiants de deuxièmes fichiers correspondant respectivement au ou aux blocs de données ; et
le stockage, par le premier appareil terminal, du ou des blocs de données dans les deuxièmes fichiers correspondants sur la base des identifiants des deuxièmes fichiers correspondant respectivement au ou aux blocs de données.

5. Procédé selon l'une quelconque des revendications 1 à 3, le procédé comprenant en outre :
le transfert, par le premier appareil terminal, d'une quatrième requête à un troisième appareil terminal, la quatrième requête comprenant des informations d'indication de transfert parallèle d'un ou plusieurs troisièmes fichiers ;
la réception, par le premier appareil terminal, d'une réponse d'erreur du troisième appareil terminal à la quatrième requête, la réponse d'erreur étant utilisée pour indiquer que le troisième appareil terminal ne prend pas en charge le transfert parallèle ; et
le transfert, par le premier appareil terminal, d'une cinquième requête, la cinquième requête étant utilisée pour indiquer que le premier appareil terminal prend en charge l'obtention du ou des troisièmes fichiers selon une manière de transfert série.

6. Procédé de transfert de fichier, comprenant :
la réception (S17), par un deuxième appareil terminal, d'une première requête transférée par un premier appareil terminal, la première requête étant utilisée pour demander un ou plusieurs premiers fichiers, et comprenant un premier identifiant de service du protocole de services de diagnostic unifiés, UDS ; et
l'envoi (S18), par le deuxième appareil terminal, d'une première réponse à la première requête au premier appareil terminal, la première réponse comprenant un ou plusieurs blocs de données, un deuxième identifiant de service du protocole UDS, et des identifiants de premiers fichiers correspondant respectivement au ou aux blocs de données,
**caractérisé en ce que** le procédé comprend en outre :
la réception, par le deuxième appareil terminal, d'une deuxième requête transférée par le premier appareil terminal, la deuxième requête comprenant des informations d'indication de transfert parallèle du ou des premiers fichiers, et un troisième identifiant de service du protocole UDS ; et
l'envoi, par le deuxième appareil terminal, d'une deuxième réponse à la deuxième requête au premier appareil terminal, la deuxième réponse comprenant les identifiants du ou des premiers fichiers,
les informations d'indication de transfert parallèle étant utilisées pour indiquer que le premier appareil terminal prend en charge l'obtention du ou des premiers fichiers selon une manière de transfert parallèle, et étant utilisées pour demander l'obtention des identifiants du ou des premiers fichiers,
le deuxième appareil terminal envoyant, au premier appareil terminal, la première réponse par transfert de la pluralité de blocs de données dans la pluralité de premiers fichiers selon la manière de transfert parallèle.

7. Procédé selon la revendication 6,
la deuxième réponse comprenant en outre des tailles du ou des premiers fichiers.

8. Procédé selon la revendication 6 ou 7, le procédé comprenant en outre :
la réception, par le deuxième appareil terminal, de premières informations de terminaison transférées par le premier appareil terminal, les premières informations de terminaison étant utilisées pour indiquer de terminer le transfert d'un premier fichier cible, et le premier fichier cible étant un premier fichier qui a été complètement transféré ; et
l'envoi, par le deuxième appareil terminal au premier appareil terminal, d'une réponse de terminaison aux premières informations de terminaison, et la libération d'un identifiant du premier fichier cible.

9. Procédé selon la revendication 6 ou 7, le procédé comprenant en outre :
la réception, par le deuxième appareil terminal, d'une troisième requête transférée par le premier appareil terminal, la troisième requête étant utilisée pour demander un ou plusieurs deuxièmes fichiers ; et
l'envoi, par le deuxième appareil terminal, d'une troisième réponse à la troisième requête au premier appareil terminal, la troisième réponse comprenant un ou plusieurs blocs de données et des identifiants de deuxièmes fichiers correspondant respectivement au ou aux blocs de données.

10. Appareil terminal, comprenant :
au moins un processeur et une mémoire ;
la mémoire étant configurée pour stocker des instructions de programme ; et
le processeur étant configuré pour appeler et exécuter les instructions de programme stockées dans la mémoire, pour permettre à l'appareil terminal de réaliser le procédé de transfert de fichier selon l'une quelconque des revendications 1 à 5.

11. Appareil terminal, comprenant :
au moins un processeur et une mémoire,
la mémoire étant configurée pour stocker des instructions de programme ; et
le processeur étant configuré pour appeler et exécuter les instructions de programme stockées dans la mémoire, pour permettre à l'appareil terminal de réaliser le procédé de transfert de fichier selon l'une quelconque des revendications 6 à 9.

12. Système de transfert de fichier, comprenant :
un premier appareil terminal et un deuxième appareil terminal,
le premier appareil terminal comprenant l'appareil de transfert de fichier selon la revendication 10 ; et
le deuxième appareil terminal comprenant l'appareil de transfert de fichier selon la revendication 11.

13. Système selon la revendication 12, le système comprenant en outre :
un troisième appareil terminal,
le troisième appareil terminal étant configuré pour :
recevoir une quatrième requête transférée par le premier appareil terminal, la quatrième requête comprenant des informations d'indication de transfert parallèle d'un ou plusieurs troisièmes fichiers ;
générer une réponse d'erreur à la quatrième requête, la réponse d'erreur étant utilisée pour indiquer que le troisième appareil terminal ne prend pas en charge le transfert parallèle ; et
recevoir une cinquième requête transférée par le premier appareil terminal, la cinquième requête étant utilisée pour indiquer que le premier appareil terminal prend en charge l'obtention du ou des troisièmes fichiers selon une manière de transfert série.

14. Support de stockage lisible par ordinateur,
le support de stockage lisible par ordinateur stockant des instructions, et lorsque les instructions sont exécutées sur un ordinateur, l'ordinateur pouvant réaliser le procédé de transfert de fichier selon l'une quelconque des revendications 1 à 5.

15. Support de stockage lisible par ordinateur,
le support de stockage lisible par ordinateur stockant des instructions, et lorsque les instructions sont exécutées sur un ordinateur, l'ordinateur pouvant réaliser le procédé de transfert de fichier selon l'une quelconque des revendications 6 à 9.
